# EUROPEAN PATENT APPLICATION

(11) **EP 4 848 052 A1**
(43) Date of publication of application: **02.12.2026**
(21) Application number: 24923316.4
(22) Date of filing: 14.09.2024
(51) Int. Cl.: G06F 3/0481, G06F 3/0486, G06F 3/04847, G06F 3/04817, G06F 1/16

(54) **INTERACTION METHOD, ELECTRONIC DEVICE, READABLE MEDIUM AND PROGRAM PRODUCT**

(30) Priority: 07.02.2024 CN 202410176385
(71) Applicant: Huawei Technologies Co., Ltd., Shenzhen, Guangdong 518129 (CN)
(72) Inventor: YANG, Yixuan, Shenzhen, Guangdong 518129 (CN); MAO, Yanyan, Shenzhen, Guangdong 518129 (CN); ZOU, Lianbo, Shenzhen, Guangdong 518129 (CN); BAO, Fanghui, Shenzhen, Guangdong 518129 (CN)
(74) Representative: Huawei European IPR
(86) International application number: PCT/CN2024/119162
(87) International publication number: WO 2025/167110

(57) **Abstract**

This application relates to the field of computer technologies, and in particular, to an interaction method, an electronic device, a readable medium, and a program product. According to the method, thumbnail windows respectively corresponding to one or more task windows displayed on a screen are displayed in a centralized manner in one area, where the area may be referred to as a task control area below. Based on this, a foldable device can identify, based on an operation, performed by a user in the task control area, that indicates moving a display location of a window, a window operated by the user and a target area or a target location to which the user intends to drag the window. In this way, an interaction solution provided in this application avoids damage to the screen caused by sliding operations performed by the user on the screen, improves efficiency with which the user adjusts a location of each window displayed on the screen, thereby improving user experience.

## Description

This application claims priority to Chinese Patent Application No. 202410176385.0, filed with the China National Intellectual Property Administration on February 7, 2024 and entitled "INTERACTION METHOD, ELECTRONIC DEVICE, READABLE MEDIUM, AND PROGRAM PRODUCT", which is incorporated herein by reference in its entirety.

### TECHNICAL FIELD

The present invention relates to the field of computer technologies, and in particular, to an interaction method, an electronic device, a readable medium, and a program product.

### BACKGROUND

With development of intelligent terminal technologies, emergence of foldable devices meets use requirements of users for different screen sizes. A foldable device may include one or more display screens that can display application interfaces. When the foldable device includes one screen, the screen may be a screen that is folded using a flexible folding technology, for example, a flexible foldable screen. When the foldable device includes a plurality of screens, each screen may be a screen that is folded using a flexible folding technology, a hinge-based folding technology, or the like.

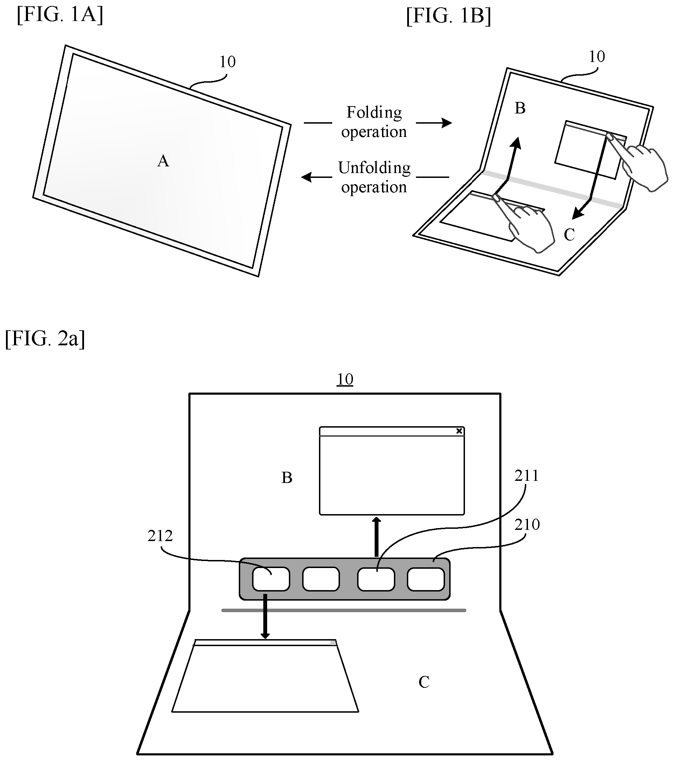

While foldable devices provide users with more screen space, switching operations performed by users between the plurality of screens become more frequent. Refer to FIG. 1A. When a foldable device 10 enters an unfolded state through an unfolding operation, a screen B and a screen C can form a larger screen A, and one or more windows are displayed on the screen A. Continue to refer to FIG. 1B. After the foldable device 10 enters a half-unfolded state through a folding operation, or after the foldable device 10 enters a half-unfolded state through an unfolding operation, the screen B and the screen C each can display one or more task windows. For example, a user may edit a document in a window displayed on the screen B, and open a plurality of reference documents on the screen C for viewing. When the user needs to move a window displaying a reference document on the screen C to the screen B, or when the user needs to move a window used for editing on the screen B to the screen C, the user needs to drag the window across the screens.

However, an operation path for cross-screen window dragging is relatively long, and during dragging, the user may cause wear to the screens of the foldable device 10. In addition, if the foldable device 10 is placed on an object, for example, a tabletop, during window dragging, and if the user applies pressure to the screen B, the foldable device 10 may tilt, resulting in poor user experience.

### SUMMARY

This application provides an interaction method, an electronic device, a readable medium, and a program product, so that a user can quickly adjust a window location on a foldable device or collaborative devices that require cross-screen dragging of a window, and an operation path for the user to adjust the window location across screens can be shortened. The user only needs to drag a mouse on a screen of the foldable device or touch and control an object to slide for a relatively short distance to complete adjustment of the window location. This can avoid damage to the screen caused by sliding operations of the user on the screen, and can also improve efficiency with which the user adjusts a location of each window displayed on the screen, thereby improving user experience.

According to a first aspect, this application provides an interaction method, applied to an electronic device. The method includes: displaying a first interface, where the first interface includes a first window and a first display area, and the first display area includes a first identification image of the first window; detecting a first drag operation performed by a user on the first identification image; and moving the first window in response to the first drag operation.

For example, the electronic device may be a foldable notebook, and the first interface may be an interface displayed when the electronic device runs various application programs or an interface displayed in a window, for example, a desktop. The first window may be a task window that displays a corresponding application interface, for example, a window that displays a home page of a video application. Alternatively, the first window may be a subpage window on a corresponding application interface, for example, a video playback window of a video application. The first display area may be, for example, a task control area including thumbnail windows or application icons respectively corresponding to one or more task windows displayed by the electronic device. The thumbnail window may include the first identification image of the first window, that is, a thumbnail window or an application icon of the first window. The first drag operation may be an operation of dragging the first identification image in the task control area by the user. Correspondingly, the first window may be adjusted, based on a direction and a distance of the drag operation, to be displayed in an area specified by the user.

In some implementations, an identification image is also referred to as a preview image. Alternatively, in some other implementations, the identification image may be carried or implemented in a control form, a button form, or another form.

In this way, the user may adjust, by performing a small-range sliding operation on the thumbnail window in the task control area, a screen displayed in an actual window. For example, when an access device such as a mouse is not used, a finger of the user only needs to slide upwards or downwards on the thumbnail window in the task control area for a short distance, so that a corresponding window can be adjusted from one screen to another screen for display. This can avoid damage to the screen caused by sliding operations of the user on the screen, and can also improve efficiency with which the user adjusts a location of each window displayed on the screen, thereby improving user experience.

In a possible implementation of the first aspect, the electronic device includes a foldable device, where the foldable device includes a first screen part and a second screen part located on two sides of a folding shaft.

For example, the electronic device may be a foldable notebook, and the foldable notebook may be a dual-fold device, a tri-fold device, or a multi-fold device. The dual-fold device is used as an example. A first screen part of the foldable notebook may be a screen on one side of a folding shaft, and a second screen part may be a screen on the other side of the folding shaft. In an unfolded state of the foldable notebook, the two screen parts may form one screen of a relatively large size. The screen parts may be components of a same screen, or may be two relatively independent screens. This is not limited herein.

In a possible implementation of the first aspect, the first screen part is located in a first direction of the second screen part, the second screen part is located in a second direction of the first screen part, and the first direction is opposite to the second direction.

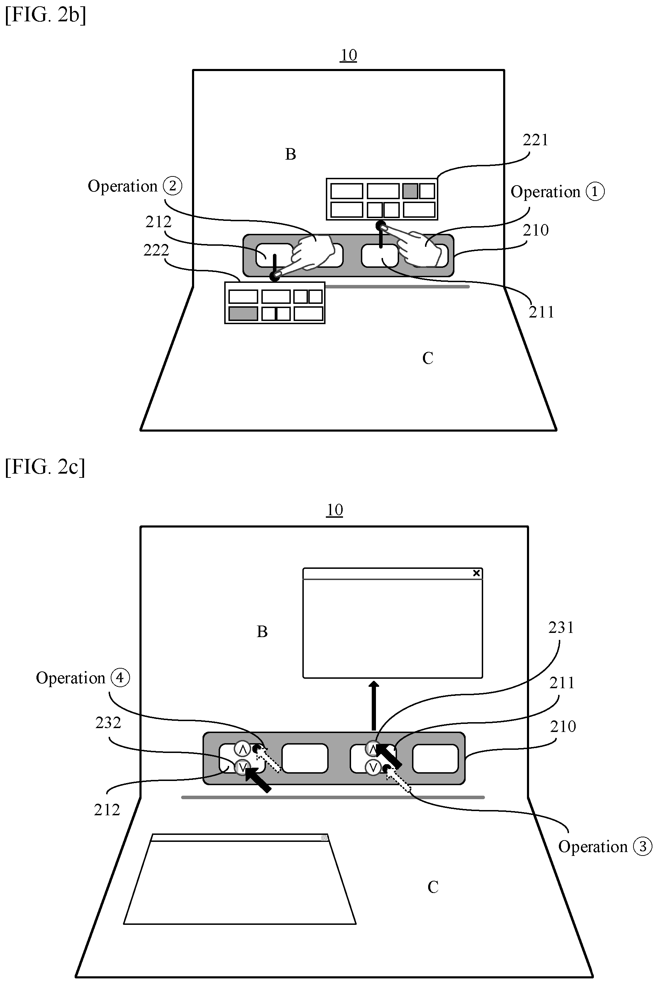

For example, one screen part of the foldable notebook may be located on one side of the folding shaft, and the other screen part may be located on the other side of the folding shaft. Therefore, one screen part may be located in a direction relative to the other screen part, for example, the first direction or the second direction. The first direction may be, for example, an upward direction, and the second direction may be, for example, a downward direction. The first screen part may be a screen A in FIG. 2a below, and the second screen part may be a screen B in FIG. 2b below. The first screen part, that is, the screen A, may be, for example, in a suspended state, and the second screen part, that is, the screen B, may be placed on a desktop or another support surface.

In a possible implementation of the first aspect, the first display area is located in the first screen part.

In a possible implementation of the first aspect, detecting the first drag operation performed by the user on the first identification image includes: detecting an operation of dragging, by the user, the first identification image to move towards the second direction.

The first display area, for example, the task control area, may be displayed on the first screen part, for example, located in an area near an edge, of the first screen part, that is close to the second screen part. For details, refer to a task control area 210 shown in FIG. 2a to FIG. 2c below. In another implementation scenario below, the task control area may also be displayed in the second screen part. For details, refer to related descriptions below. This is not limited herein.

In a possible implementation of the first aspect, the second screen part includes a displayed second interface, the second interface includes a second window, and the first display area includes a second identification image corresponding to the second window.

In a possible implementation of the first aspect, the method further includes: detecting a second drag operation of dragging, by the user, the second identification image to move towards the first direction; and moving, in response to the second drag operation, the second window to the first interface displayed on the first screen part.

In a possible implementation of the first aspect, detecting the first drag operation performed by the user on the first identification image includes: detecting that a first distance by which the user drags the first identification image to move towards the second direction meets a first threshold condition; and/or detecting the second drag operation of dragging, by the user, the second identification image to move towards the first direction includes: detecting that a second distance by which the user drags the second identification image to move towards the first direction meets the first threshold condition.

For example, the first window is originally displayed on the first screen part, and that the user drags the first identification image to move towards the second direction may indicate to display the first window corresponding to the first identification image on the second screen part.

Similarly, the second window is originally displayed on the second screen part, and that the user drags the second identification image to move towards the first direction may indicate to display the second window corresponding to the second identification image on the first screen part.

In a possible implementation of the first aspect, detecting the first drag operation performed by the user on the first identification image includes:

detecting a first combination operation performed by the user on the first identification image, where the first combination operation includes a first operation of dragging the first identification image to move towards the second direction and hovering; and detecting an operation of selecting, by the user, a first area in a second display area displayed by triggering the first operation, where the second display area includes at least one display area recommended for the first window, the at least one display area includes the first area, and the at least one display area is located in a display area of the second screen part.

In a possible implementation of the first aspect, moving the first window in response to the first drag operation includes: displaying, in response to the first combination operation, the first window in a corresponding area of the first area in the second screen part.

For example, the first combination operation may include an operation ② shown in FIG. 2b below. The user may drag a window to slide down and then hover, or press a window with a finger and then hover. In this case, the user may click a selected layout location in a second display area displayed by triggering the operation, for example, in a layout menu shown in FIG. 2b.

In a possible implementation of the first aspect, the method includes: detecting a second combination operation performed by the user on the second identification image, where the second combination operation includes a second operation of dragging the second identification image to move towards the first direction and hovering; detecting an operation of selecting, by the user, a second area in a third display area displayed by triggering the second operation, where the third display area includes at least one display area recommended for the second window, the at least one display area includes the second area, and the at least one display area is located in a display area of the first screen part; and displaying, in response to the second combination operation, the second window in a corresponding area of the second area in the first screen part.

For example, the second combination operation may include an operation ① shown in FIG. 2b below. The user may drag a window to slide upwards and then hover, or press a window with a finger and then hover. In this case, the user may click a selected layout location in a second display area displayed by triggering the operation, for example, in a layout menu shown in FIG. 2b.

In a possible implementation of the first aspect, a third distance by which the first identification image is dragged to move towards the second direction meets a second threshold condition; and/or a fourth distance by which the second identification image is dragged to move towards the first direction meets the second threshold condition.

In a possible implementation of the first aspect, duration corresponding to the hovering operation meets a third threshold condition.

In a possible implementation of the first aspect, detecting the first drag operation performed by the user on the first identification image includes: detecting a third combination operation performed by the user, by using the mouse, on the first identification image, where the third combination operation includes a third operation of placing the mouse on the first identification image and hovering; and detecting an operation of clicking, by the user by using the mouse, a first control in a plurality of controls displayed by triggering the third operation, where the first control indicates a screen part in which the first window is displayed.

For example, the third combination operation may include an operation ③ or an operation ④ shown in FIG. 2c below. The user may place the mouse on a window 211 and hover, so that the electronic device displays layout controls, which are a plurality of controls displayed by triggering the third operation. Correspondingly, the first control may be any control in the layout controls.

In a possible implementation of the first aspect, the screen part indicated by the first control for display is the second screen part.

In a possible implementation of the first aspect, moving the first window in response to the first drag operation includes: displaying, in response to the third combination operation, the first window in the second screen part indicated by the first control.

In a possible implementation of the first aspect, an icon indicating the second direction is displayed on the first control.

In a possible implementation of the first aspect, duration corresponding to the hovering operation meets a fourth threshold condition.

In a possible implementation of the first aspect, the first display area is located in the second screen part.

In a possible implementation of the first aspect, detecting the first drag operation performed by the user on the first identification image includes: detecting an operation of dragging, by the user, the first identification image to move towards the first direction.

For example, the first display area is a task control area, and the task control area may also be displayed in the second screen part placed on the desktop.

In a possible implementation of the first aspect, detecting the first drag operation performed by the user on the first identification image includes: detecting a fourth combination operation performed by the user on the first identification image, where the fourth combination operation includes a fourth operation of dragging the first identification image to move towards the first direction and hovering; and detecting an operation of selecting, by the user, a third area in a fourth display area displayed by triggering the fourth operation, where the fourth display area includes at least one display area recommended for the first window, the at least one display area includes the third area, and the at least one display area is located in a display area of the first screen part.

In a possible implementation of the first aspect, detecting the first drag operation performed by the user on the first identification image includes: detecting a fifth combination operation performed by the user, by using the mouse, on the first identification image, where the fifth combination operation includes a fifth operation of placing the mouse on the first identification image and hovering; and detecting an operation of clicking, by the user by using the mouse, a second control in a plurality of controls displayed by triggering the fifth operation, where the second control indicates a screen part in which the first window is displayed, and the screen part includes the first screen part or the second screen part.

In a possible implementation of the first aspect, the first identification image includes: a thumbnail window corresponding to the first window; or an application icon corresponding to an application interface displayed in the first window.

According to a second aspect, this application provides an electronic device, including one or more processors, and one or more memories. The one or more memories store one or more programs, and when the one or more programs are executed by the one or more processors, the electronic device is enabled to perform the interaction method according to the first aspect and the possible implementations of the first aspect.

According to a third aspect, this application provides a computer-readable medium. The readable medium stores instructions, and when the instructions are executed on a computer, the computer is enabled to perform the interaction method according to the first aspect and the possible implementations of the first aspect.

According to a fourth aspect, this application provides a computer program product, including a computer program/instructions. When the computer program/instructions are executed by a processor, the interaction method according to the first aspect and the possible implementations of the first aspect is implemented.

For beneficial effects of the second aspect to the fourth aspect, refer to related descriptions in the first aspect and the possible implementations of the first aspect. Details are not described herein again.

### BRIEF DESCRIPTION OF DRAWINGS

FIG. 1A and FIG. 1B are diagrams of an application scenario of an interaction method according to an embodiment of this application;
FIG. 2a is a diagram of an interface corresponding to a touch-based interaction manner according to an embodiment of this application;
FIG. 2b is a diagram of an interface corresponding to a touch-based interaction manner according to an embodiment of this application;
FIG. 2c is a diagram of an interface corresponding to a mouse-based interaction manner according to an embodiment of this application;
FIG. 2d is a diagram of a display location and a style of a task control area in an interaction system including a foldable device and an external display screen according to an embodiment of this application;
FIG. 3a is a diagram of a status change of a dual-fold device under an unfolding operation according to an embodiment of this application;
FIG. 3b is another diagram of a status change of a dual-fold device under an unfolding operation according to an embodiment of this application;
FIG. 3c is a diagram of a status change of a multi-fold device under an unfolding operation according to an embodiment of this application;
FIG. 4 is a diagram of an implementation procedure of an interaction method according to an embodiment of this application;
FIG. 5 is a diagram of an interface for enabling/disabling a super window function according to an embodiment of this application;
FIG. 6a is a diagram of an operation interface of dragging a target window downwards, included in a third user operation, by a user according to an embodiment of this application;
FIG. 6b is a diagram of a response interface of dragging a target window downwards, included in a third user operation, by a user according to an embodiment of this application;
FIG. 6c is a diagram of an operation interface of dragging a target window upwards, included in a third user operation, by a user according to an embodiment of this application;
FIG. 6d is a diagram of a response interface of dragging a target window upwards, included in a third user operation, by a user according to an embodiment of this application;
FIG. 7a is a diagram of an operation interface of dragging a target window downwards and hovering, included in a third user operation, by a user according to an embodiment of this application;
FIG. 7b is a diagram of a response interface of dragging a target window downwards and hovering, included in a third user operation, by a user according to an embodiment of this application;
FIG. 7c is a diagram of a response interface obtained after selecting a target area, included in a third user operation, by a user from a layout menu triggered by downward hovering according to an embodiment of this application;
FIG. 8a is a diagram of an operation interface of dragging a target window upwards and hovering, included in a third user operation, by a user according to an embodiment of this application;
FIG. 8b is a diagram of a response interface of dragging a target window upwards and hovering, included in a third user operation, by a user according to an embodiment of this application;
FIG. 8c is a diagram of a response interface obtained after selecting a target area, included in a third user operation, by a user from a layout menu triggered by upward hovering according to an embodiment of this application;
FIG. 9a is a diagram of an operation interface of hovering a mouse over a target window, included in a third user operation, by a user according to an embodiment of this application;
FIG. 9b is a diagram of an operation interface corresponding to clicking a down-direction control, included in a third user operation, by a user by using a mouse in layout controls displayed by triggering hovering according to an embodiment of this application;
FIG. 9c is a diagram of a response interface corresponding to clicking a down-direction control, included in a third user operation, by a user by using a mouse in layout controls displayed by triggering hovering according to an embodiment of this application;
FIG. 9d is a diagram of another operation interface of hovering a mouse over a target window, included in a third user operation, by a user according to an embodiment of this application;
FIG. 9e is a diagram of an operation interface corresponding to clicking an up-direction control, included in a third user operation, by a user by using a mouse in layout controls displayed by triggering hovering according to an embodiment of this application;
FIG. 9f is a diagram of a response interface corresponding to clicking an up-direction control, included in a third user operation, by a user by using a mouse in layout controls displayed by triggering hovering according to an embodiment of this application;
FIG. 10 is a diagram of an application scenario of another interaction method according to an embodiment of this application;
FIG. 11 is a diagram of an implementation procedure of another interaction method according to an embodiment of this application;
FIG. 12 is a diagram of a software structure of an operating system according to an embodiment of this application;
FIG. 13 is a diagram of a software structure of another operating system according to an embodiment of this application; and
FIG. 14 is a diagram of a hardware structure of an electronic device according to an embodiment of this application.

### DESCRIPTION OF EMBODIMENTS

To make objectives, technical solutions, and advantages of embodiments of this application clearer, the following describes the technical solutions in embodiments of this application in detail with reference to accompanying drawings and specific implementations of the specification.

It may be understood that an electronic device in embodiments of this application may also be referred to as a terminal (terminal), a terminal device, user equipment (user equipment, UE), a mobile station (mobile station, MS), a mobile terminal (mobile terminal, MT), or the like. The terminal device may be a foldable notebook, a foldable mobile phone (mobile phone), a foldable tablet computer (pad), a wireless terminal in industrial control (industrial control), a wireless terminal in self-driving (self-driving), a wireless terminal in a smart city (smart city), a wireless terminal in a smart home (smart home), or the like.

As described above, in a half-unfolded state of a foldable device shown in FIG. 1B, when a user performs an operation of dragging a window across screens from a screen B to a screen C or from a screen C to a screen B, a path is relatively long, and wear is caused to the screens of the foldable device. In addition, the device is prone to tilt, resulting in poor user experience.

To resolve the foregoing problems, this application provides an interaction method. Specifically, according to the method, thumbnail windows respectively corresponding to one or more task windows displayed on a screen are displayed in a centralized manner in one area, and the area may be referred to as a task control area below. Based on this, the foldable device can identify, based on an operation, performed by the user in the task control area, that indicates moving a display location of a window, a window operated by the user and a target area or a target location to which the user intends to drag the window. For example, in a task control area 210 shown in FIG. 2a, a window 211, a window 212, and the like are thumbnail windows respectively corresponding to display windows of application interfaces on a screen of a foldable device 10. The user may drag the window 211 or the window 212 upwards in the task control area 210, to control an actual task window corresponding to the window 211 to be displayed on a screen B or a display area B of the foldable device 10. The user may also drag the window 211 or the window 212 downwards in the task control area 210, to control the actual task window corresponding to the window 211 to be displayed on a screen C or a display area C of the foldable device 10.

In this way, the user can quickly adjust a window location on the foldable device or collaborative devices that require cross-screen dragging of a window, and an operation path for the user to adjust the window location across screens can be shortened. The user only needs to drag a mouse on a screen of the foldable device or touch and control an object to slide for a relatively short distance to complete adjustment of the window location. For example, when an access device such as the mouse is not used, a finger of the user only needs to slide upwards or downwards on a corresponding window in the task control area for a short distance, so that the corresponding window is adjusted from one screen to another screen. According to the interaction solution provided in this application, damage to the screen caused by sliding operations performed by the user on the screen is avoided, and efficiency with which the user adjusts a location of each window displayed on the screen can be improved, thereby improving user experience.

It may be understood that the task control area may also be referred to as a task hub in some embodiments. The electronic device supports a function of displaying the task control area, and the function may be referred to as a super window function or the like in some embodiments. This is not limited herein.

An operation performed by the user in the task control area is not limited to the foregoing operation of dragging the window upwards or downwards, and may also include an operation of dragging the corresponding window upwards and then hovering (hover) or hovering over a corresponding window.

As an example, as shown in an operation ① shown in FIG. 2b, the user may drag the window 211 to slide upwards and then hover, or press the window 211 with a finger and hover. In this case, the foldable device 10 may display, in the task control area or above the task control area, a layout menu 221 shown in FIG. 2b. The user clicks a selected layout location in the layout menu 221, and the actual task window corresponding to the window 211 may be adjusted to a corresponding layout location in the screen B or the display area B. Continue to refer to an operation ② shown in FIG. 2b. The user may drag the window 212 to slide downwards and then hover, or press the window 212 with a finger and hover. In this case, the foldable device 10 may display, in the task control area or below the task control area, a layout menu 222 shown in FIG. 2C. The user clicks a selected layout location in the layout menu 222, and an actual task window corresponding to the window 212 may be adjusted to a corresponding layout location in the screen C or the display area C.

The operation performed by the user in the task control area may further include an operation of placing the mouse on a corresponding window in the task control area and hovering, and clicking an invoked control, and the like. This is not limited herein. Refer to an operation ③ shown in FIG. 2c. As an example, the user may place the mouse on the window 211 and hover. In this case, the foldable device 10 may display, on the window 211, layout controls shown in FIG. 2c. The user moves the mouse to an up-direction control 231 in the layout controls and clicks the control, so that the actual task window corresponding to the window 211 may be adjusted to the screen B or the display area B. Continue to refer to an operation ④ shown in FIG. 2c. The user may place the mouse on the window 212 and hover. In this case, the foldable device 10 may display, on the window 212, layout controls shown in FIG. 2c. The user moves the mouse to a down-direction control 232 in the layout controls and clicks the control, so that the actual task window corresponding to the window 212 may be adjusted to the screen C or the display area C.

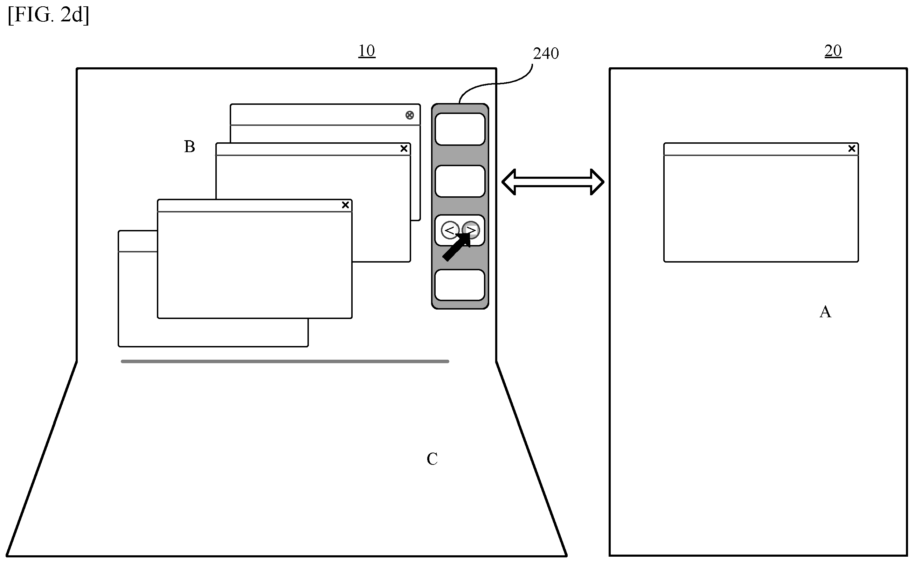

It may be understood that the electronic device to which the interaction method provided in this application is applicable may not be limited to the foldable device, and may also include two or more cross-screen collaborative devices that require cross-screen dragging of a window. In this case, a display location and a style of the task control area may not be limited to locations and styles shown in FIG. 2a to FIG. 2c. Refer to FIG. 2d. For the foldable device 10 and an externally connected display screen 20, a task control area 240 may also be displayed on a right edge of the screen B. When the user moves the mouse to hover over a corresponding window in the task control area 240, the user may click a right-direction control in corresponding invoked layout controls, to control a corresponding actual task window to be displayed on a screen A of the externally connected display screen 20. In some embodiments, a disposition direction of the foldable device 10 and the externally connected display screen 20 may also be opposite to or different from that shown in FIG. 2b. The foldable device 10 may also be an electronic device in another form, such as a notebook computer, a desktop computer, or a tablet computer. The display locations and the styles of the task control area on the screen of the foldable device 10 may also be another location and style. This is not limited herein.

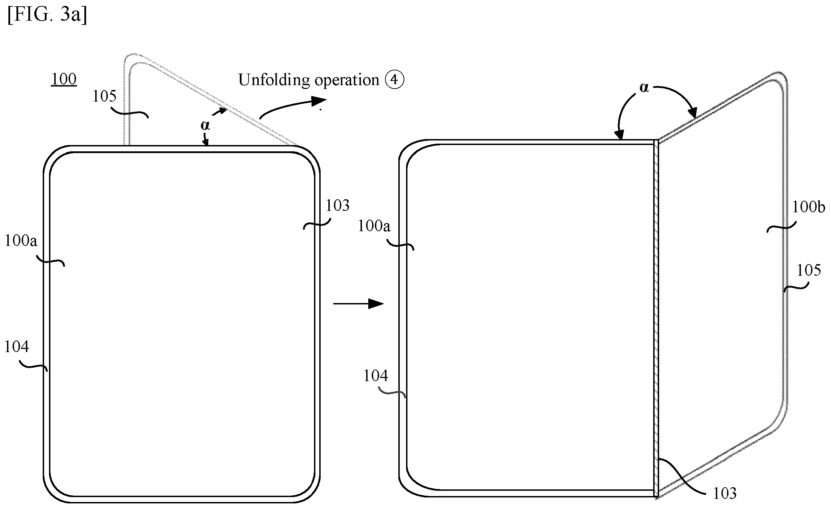

It may be understood that the foldable device to which the interaction method provided in this application is applicable may be a dual-fold device, or may be a multi-fold device such as a tri-fold device. This is not limited herein. In an example scenario, refer to FIG. 3a. The foldable screen 10 is a dual-fold device 100, and the dual-fold device 100 may include a primary screen 100a, a secondary screen 100b, a folding shaft 103, a folding part 104, and a folding part 105. The primary screen 100a is located on the folding part 104, the secondary screen 100b is located on the folding part 105, and the folding part 104 and the folding part 105 are connected through folding via the folding shaft 103. In this way, the dual-fold device 100 may support an unfolding operation ④ of unfolding the folding part 104 and the folding part 105 to a same plane. After the dual-fold device 100 is unfolded, the primary screen 100a and the secondary screen 100b may form a relatively large display screen.

It may be understood that when an included angle α between the folding part 104 and the folding part 105 that are unfolded based on the folding shaft 103 is less than a preset angle for triggering entering a folded state, the dual-fold device 100 is in the folded state. In the folded state, the primary screen 100a may be in an active state, and may be configured to display an application interface or respond to a user operation. The secondary screen 100b may be in an inactive state, for example, a state in which the screen is off and no interface is displayed. When the included angle α between the folding part 104 and the folding part 105 that are unfolded based on the folding shaft 103 is greater than the preset angle, the dual-fold device 100 may switch to an unfolded state. In the unfolded state, the primary screen 100a and the secondary screen 100b each may be in an active state, in other words, the primary screen 100a and the secondary screen 100b each display a display interface. In this case, based on the interaction method provided in this application, the user may quickly adjust, in the dual-fold device 100, a display location of a task window to the primary screen 100a or the secondary screen 100b for display.

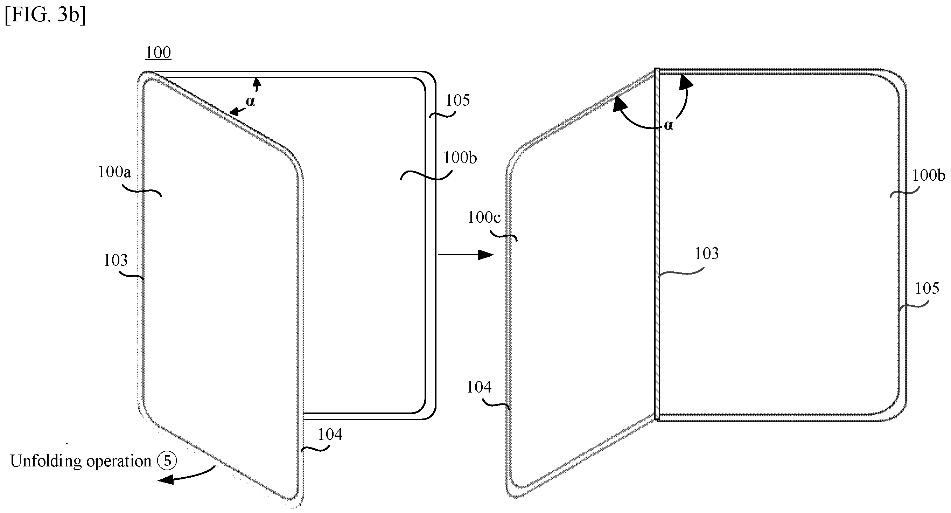

In some other embodiments, refer to FIG. 3b. The dual-fold device 100 may further include a secondary screen 100c. For example, the primary screen 100a is located on a front side of the folding part 104, the secondary screen 100c is located on a back side of the folding part 104, and the secondary screen 100b is located on the folding part 105. The user may also perform an unfolding operation on the dual-fold device 100 in another manner. For example, in an unfolding operation ⑤ shown in FIG. 3b, the user may unfold the secondary screen 100b and the secondary screen 100c that are folded in the dual-fold device 100 to a same plane. After the dual-fold device 100 is unfolded, the secondary screen 100c and the secondary screen 100b may form a relatively large display screen. In this folded state, the primary screen 100a may be in an active state, and the secondary screen 100c and the secondary screen 100b each may be in an inactive state. When the included angle α between the folding part 104 and the folding part 105 that are unfolded based on the folding shaft 103 is greater than the preset angle, the dual-fold device 100 may switch to an unfolded state. In the unfolded state, the secondary screen 100c and the secondary screen 100b each may be in an active state, and the primary screen 100a may be in an inactive state. In this case, based on the interaction method provided in this application, the user may quickly adjust, in the dual-fold device 100, a display location of a task window to the secondary screen 100b or the secondary screen 100c for display.

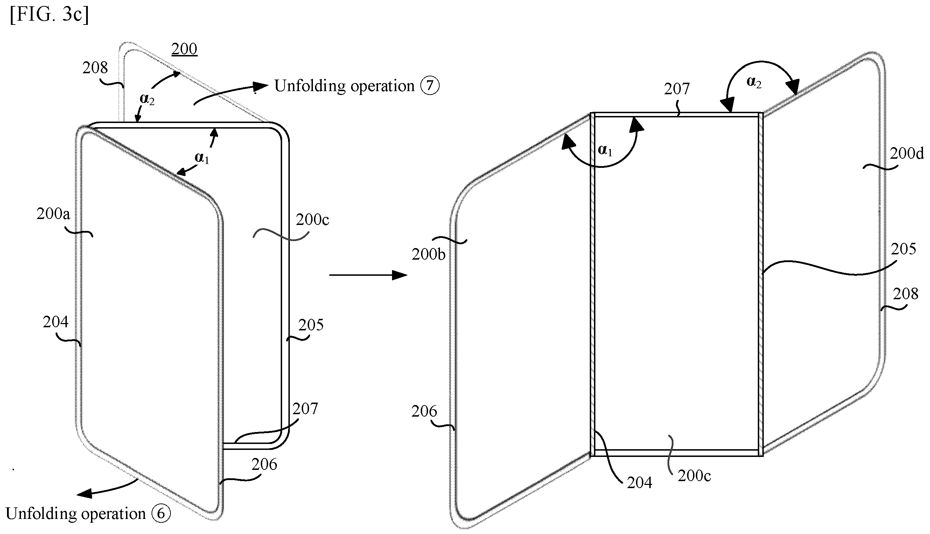

In another example scenario, refer to FIG. 3c. The foldable device may be a tri-fold device 200. The tri-fold device 200 may include a primary screen 200a, a secondary screen 200b, a secondary screen 200c, a secondary screen 200d, a folding shaft 204, a folding shaft 205, a folding part 206, a folding part 207, and a folding part 208. The primary screen 200a is located on a front side of the folding part 206, the secondary screen 200b is located on a back side of the folding part 206, the secondary screen 200c is located on the folding part 207, and the secondary screen 200d is located on the folding part 208. The folding part 206 is connected to the folding part 207 through folding via the folding shaft 204, and the folding part 207 is connected to the folding part 208 through folding via the folding shaft 205. Based on the folding shaft 204, the tri-fold device 200 may support an unfolding operation ⑥ that can unfold the folding part 206 and the folding part 207 to a same plane. It may be understood that the unfolding operation ⑥ is to unfold, to a same plane as the secondary screen 200b, the secondary screen 200c that is folded to a back side of the primary screen 200a in the tri-fold device 200. After the tri-fold device 200 is unfolded based on the unfolding operation ⑥, the secondary screen 200b and the secondary screen 200c may form a relatively large display screen.

When an included angle α1 between the folding part 206 and the folding part 207 that are unfolded based on the folding shaft 204 is less than preset angle, and an included angle α2 between the folding part 207 and the folding part 208 that are unfolded based on the folding shaft 205 is also less than the preset angle, the dual-fold device 100 is in a folded state. In the folded state, the primary screen 200a may be in an active state, and the secondary screen 200b, the secondary screen 200c, and the secondary screen 200d each may be in an inactive state. However, when the included angle α1 between the folding part 206 and the folding part 207 that are unfolded based on the folding shaft 204 is greater than the preset angle, the dual-fold device 100 may consider that the user performs the unfolding operation ⑥. In this case, a state in which the included angle α1 of the dual-fold device 100 is greater than the preset angle and the included angle α2 is less than the preset angle may be referred to as a half-unfolded state below. In the half-unfolded state, the secondary screen 200b and the secondary screen 200c each may be in an active state, and the primary screen 200a and the secondary screen 200d each be in an inactive state. In this case, based on the interaction method provided in this application, the user may quickly adjust, in the dual-fold device 100, a display location of a task window to the secondary screen 200b or the secondary screen 200c for display.

Further, the user may also unfold, through an unfolding operation ⑦, the secondary screen 200d folded in the tri-fold device 200 to a same plane as the secondary screen 200b and the secondary screen 200c. After the secondary screen 200d is unfolded, the secondary screen 200b, the secondary screen 200c, and the secondary screen 200d may form a relatively large display screen. In this case, a state in which the tri-fold device 200 enables, based on the unfolding operation ⑥ and the unfolding operation ⑦, the secondary screen 200b, the secondary screen 200c, and the secondary screen 200d to be unfolded to the same plane may be referred to as an unfolded state below. In the unfolded state, the secondary screen 200b, the secondary screen 200c, and the secondary screen 200d each be in an active state, and the primary screen 200a may be in an inactive state. In this case, the tri-fold device 200 may display one or more task windows on the secondary screen 200c and the secondary screen 200d, and display one or more task windows such as an input method soft keyboard on the secondary screen 200b. The secondary screen 200c and the secondary screen 200d form a relatively large display screen based on the unfolding operation ⑦. In this case, based on the interaction method provided in this application, the user may quickly adjust, in the tri-fold device 200, a display location of a task window to the secondary screen 200b or the relatively large display screen formed by the secondary screen 200c and the secondary screen 200d for display.

A location for disposing a folding shaft of the foldable device, a folding manner, and a folding direction are not limited herein in this application.

Based on the interaction manner provided by the task control area shown in FIG. 2a to FIG. 2d, and examples such as a display location and a style of the task control area, the following describes in detail an implementation process of the interaction method provided in this application with reference to specific embodiments of different application scenarios.

The following first describes in detail a specific implementation process of the interaction method provided in this application in a foldable device with reference to Embodiment 1.

### Embodiment 1

An embodiment of this application provides a specific implementation process of an interaction method applied to a foldable device. For the foldable device, refer to the foldable device 10 in the scenario shown in FIG. 1A and FIG. 1B. The foldable device may be an electronic device such as a foldable notebook, a foldable mobile phone, a foldable tablet, or a foldable large-screen device. The following continues to use the foldable device 10 in the scenario shown in FIG. 1A and FIG. 1B as an example to describe the specific implementation process of the interaction method provided in this embodiment of this application.

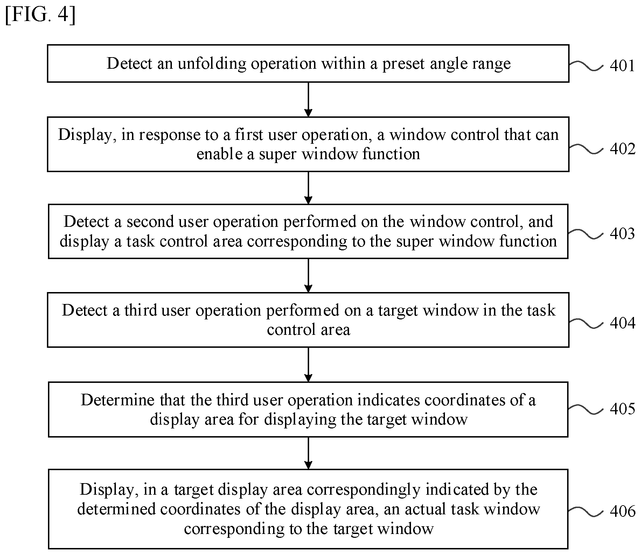

FIG. 4 is a diagram of an implementation procedure of an interaction method according to an embodiment of this application. It may be understood that each step in the procedure shown in FIG. 4 may be performed by the foldable device 10. As described above, the foldable device may include the electronic device such as the foldable notebook, the foldable mobile phone, the foldable tablet, or the foldable large-screen device.

Specifically, as shown in FIG. 4, the implementation procedure may include the following steps.

401: Detect an unfolding operation within a preset angle range.

For example, the foldable device 10 may include the dual-fold device that supports different folding manners shown in FIG. 3a and FIG. 3b, the tri-fold device shown in FIG. 3c, another multi-fold device, another foldable device that supports different folding manners, and the like. This is not limited herein. As an example, as shown in FIG. 3a to FIG. 3c, the unfolding operation detected by the foldable device may include the unfolding operation ④ shown in FIG. 3a, the unfolding operation ⑤ shown in FIG. 3b, the unfolding operations ⑥ and ⑦ shown in FIG. 3c, and the like.

It may be understood that, in a process in which the foldable device 10 enters an unfolded state from a folded state, when an included angle between adjacent screens connected to a folding shaft is greater than a relatively small preset angle (which may be denoted as a first preset angle), the two adjacent screens are activated, and the foldable device 10 may first enter the foregoing half-unfolded state. In this case, the foldable device 10 may continue to perform the following steps 402 to 408, display a task control area in response to a user operation, and adjust a location of a related task window in a display area on each screen based on the task control area, and the like. In other words, the foldable device 10 continues to perform the interaction method provided in this embodiment of this application.

In a process in which the foldable device 10 continues to be unfolded, when the included angle between the two adjacent screens connected to the folding shaft reaches a relatively large preset angle (which may be denoted as a second preset angle), for example, reaches 180 degrees, the two screens may be combined into one relatively large screen. In other words, the two adjacent screens are used as different display areas of a same screen and are combined into a same relatively large display area. In this case, the foldable device 10 is in an unfolded state, and may display an interface by using the relatively large screen or the relatively large display area. In this case, the foldable device 20 does not need to perform a cross-screen operation, and may not perform the following steps. A window control that can enable a super window function can be displayed, and the task control area does not need to be displayed.

402: Display, in response to a first user operation, the window control that can enable the super window function.

For example, the first user operation includes an operation of opening a control center, a related operation of enabling the super window function in a setting interface, or the like.

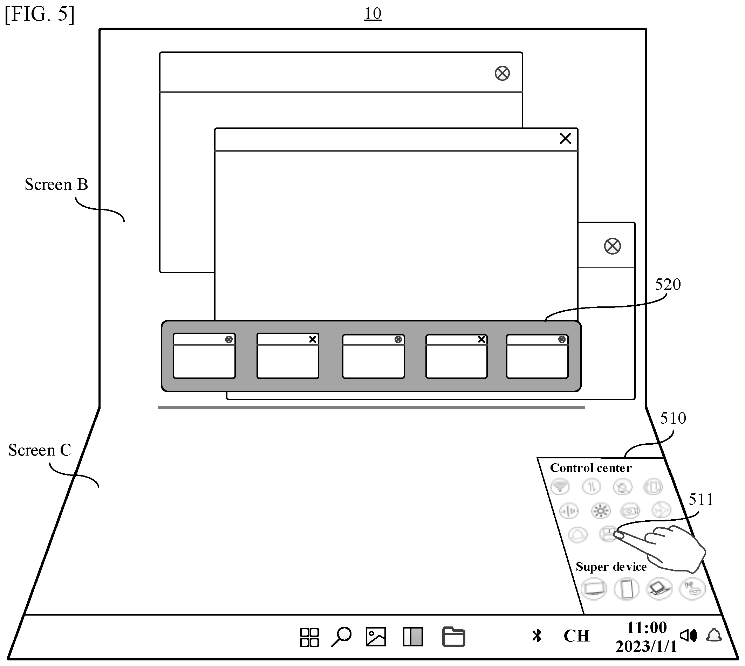

For example, as shown in FIG. 5, when the foldable device 10 is in the foregoing half-unfolded state, a user may operate, in a taskbar displayed on the screen C of the foldable device 10, to open a control center 510. As shown in FIG. 5, the control center 510 may include a window control 511 that can quickly enable the super window function.

It may be understood that, in this embodiment of this application, the first user operation is, for example, a user operation of opening the control center 510 shown in FIG. 5. In some other embodiments, the first user operation may also be a voice instruction operation or the like. This is not limited herein.

403: Detect a second user operation performed on the window control, and display a task control area corresponding to the super window function.

For example, the second user operation may include a click operation performed by the user on the window control, an operation in which the user instructs, according to a voice instruction, the foldable device 10 to enable a switch of the super window function correspondingly controlled by the window control, and the like. This is not limited herein.

As an example, also as shown in FIG. 5, the user may click the window control 511 in the control center 510, to trigger the foldable device 10 to display a task control area 520. The task control area 520 may be configured to control each currently displayed actual task window, and each thumbnail window displayed in the task control area 520 may correspond to each actual task window currently opened by the foldable device 10. It may be understood that the actual task window may be an interface display window of an application program run by the foldable device 10.

It may be understood that the task control area 520 shown in FIG. 5 may be displayed on the screen B, and may be displayed near a joint between the screen B and the screen C. In some other embodiments, a display location and a style of the task control area may also be different from a display location and a display style shown in FIG. 5. For example, the task control area may also be displayed on the screen C. This is not limited herein.

In some other embodiments, the task control area 520 may not display the thumbnail window, but display an icon of a related application, another identification image that can indicate an actual task window of a corresponding application, or the like. This is not limited herein.

404: Detect a third user operation performed on a target window in the task control area.

For example, the third user operation includes at least one of the following: an operation of dragging the target window upwards or downwards (refer to FIG. 2a), an operation of dragging the target window upwards and then hovering or hovering over a corresponding window (refer to FIG. 2b), and an operation of placing a mouse on the target window in the task control area and hovering, and clicking an invoked control when the mouse is used (refer to FIG. 2c). This is not limited herein. It may be understood that the target window may be any one of one or more task windows displayed in the task control area, and the third user operation may control the target window to be displayed in any display area of the screen B or the screen C of the foldable device 10. This is not limited herein.

It may be understood that, in the foldable device 10, a related threshold may be preset corresponding to the third user operation, and is used as a recognition condition for recognizing the third user operation and further triggering the foldable device 10 to continue to perform the following steps. For example, as shown in FIG. 2a, a first distance threshold corresponding to upward or downward movement of the user may be preset in the foldable device 10 as a recognition condition for detecting whether an operation of dragging the target window upwards or downwards by the user can trigger implementation of the following step 405. For another example, as shown in FIG. 2b, a second distance threshold corresponding to upward or downward movement before the user hovers may be preset in the foldable device 10 as a recognition condition for detecting whether the user wants to invoke a layout menu, and the recognition condition may be used to recognize a user intention. It may be understood that, in some embodiments, the first distance threshold may be greater than the second distance threshold.

In some other embodiments, as shown in FIG. 2c, a time threshold corresponding to mouse hovering duration may be further preset in the foldable device 10 as a recognition condition for detecting whether the user wants to invoke an up-direction or down-direction control, or the like. This is not limited herein.

Specifically, the third user operation performed by the user on a screen of the foldable device 10, and an interface change process correspondingly displayed when the foldable device 10 responds to the third user operation are described below in detail with reference to related interface diagrams. Details are not described herein.

405: Determine that the third user operation indicates coordinates of a display area for displaying the target window.

For example, the foldable device 10 may determine, based on a drag direction of the third user operation, location information of the display area selected based on the third user operation, or the like, the coordinates of the display area indicated by the operation. In some embodiments, the coordinates of the display area may be determined based on location information of a layout area selected by the user in a layout menu. For example, after the user drags the target window upwards, hovers, and selects one layout area in one of layout styles in the layout menu displayed by triggering, the foldable device 10 may display, in the layout area, an actual task window corresponding to the target window.

It may be understood that the coordinates of the display area may include a coordinate information set corresponding to a boundary location of the display area, and the coordinate information set may include coordinates of each point in the display area that can be determined in the display screen of the foldable device. Details are not described herein.

406: Display, in a target display area correspondingly indicated by the determined coordinates of the display area, the actual task window corresponding to the target window.

For example, the foldable device 10 determines the corresponding target display area based on the determined coordinates of the display area. Refer to FIG. 2a to FIG. 2c. The display area may be located on the screen B of the foldable device 10, or may be located on the screen C of the foldable device 10. This is not limited herein. Further, the foldable device 10 may control to display, in the target display area, an actual application window corresponding to the target window. It may be understood that the actual application window may be an interaction interface display window of an application program such as an office application or a browser application.

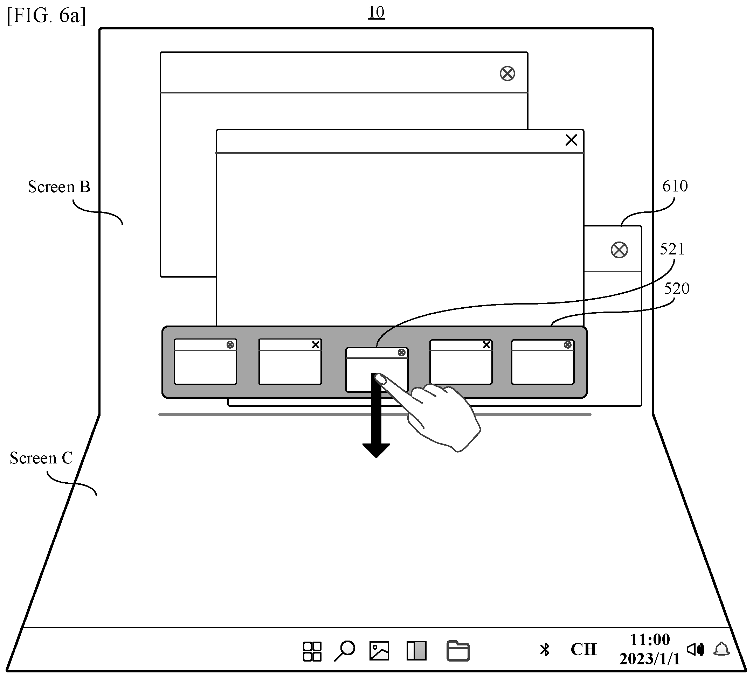

The following describes, with reference to FIG. 6a to FIG. 6d, FIG. 7a to FIG. 7c, FIG. 8a to FIG. 8c, and FIG. 9a to FIG. 9f, a related interface change process involved in a process in which the foldable device 10 performs the foregoing steps 404 to 406. Details are as follows.

FIG. 6a to FIG. 6d are diagrams of an interface change process triggered by an operation manner of the third user operation according to an embodiment of this application.

Refer to FIG. 6a. After performing step 403 and detecting the second user operation, the foldable device 10 may display a task control area 520 shown in FIG. 6a, that is, the task control area 520 shown in FIG. 5. As shown in FIG. 6a, the user may drag a window 521 downwards in the task control area 520 displayed on the foldable device 10. The window 521 may be a thumbnail window corresponding to an actual task window 610 currently displayed on the screen B. Therefore, an operation of dragging the window 521 downwards shown in FIG. 6a may indicate the foldable device 10 to display the actual task window 610 on the screen C, or adjust the actual task window 610 to the screen C for display. The window 521 in the task control area 520 may be the thumbnail window of the actual task window 610.

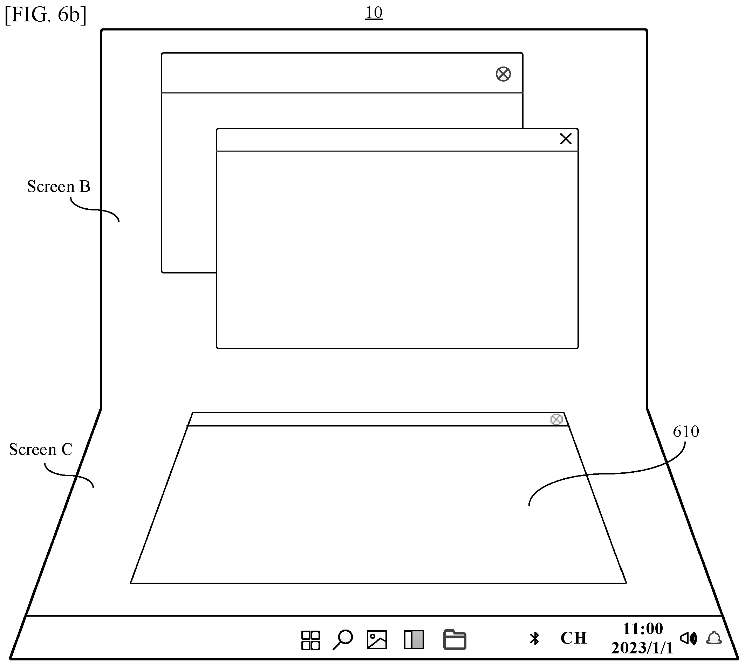

It may be understood that, when detecting that a distance by which the user drags the window 521 downwards exceeds a first preset distance, the foldable device 10 may determine to display, on the screen C, the actual task window 610 corresponding to the window 521. In this case, the foldable device 10 may continue to display an interface shown in FIG. 6b.

Refer to FIG. 6b. In response to the third user operation of dragging the thumbnail window in the task control area downwards by the user, the foldable device 10 may display, on the screen C, the actual task window 610 corresponding to the thumbnail window. In this case, the user may continue to perform another operation in the actual task window 610 displayed on the screen C, to implement interaction with an application corresponding to the actual task window 610.

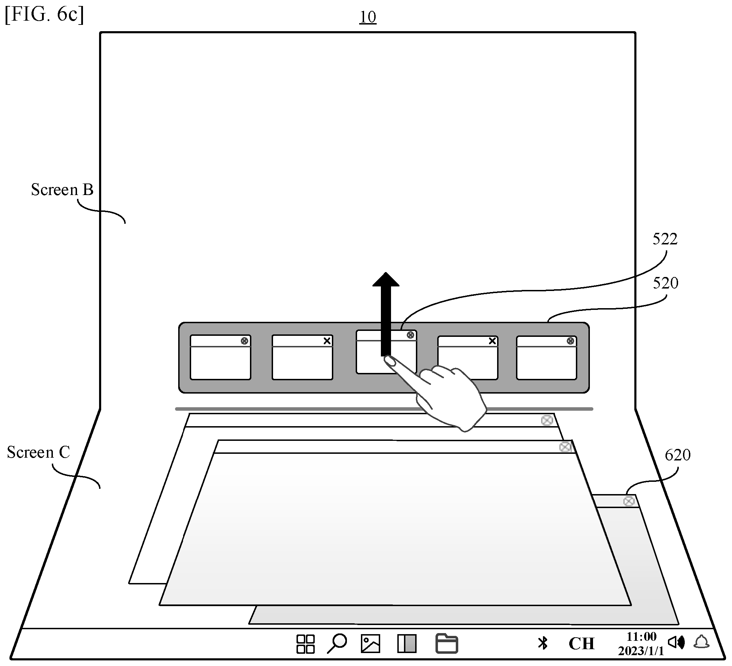

Refer to FIG. 6c. After performing step 403 and detecting the second user operation, the foldable device 10 may display a task control area 520 shown in FIG. 6c, that is, the task control area 520 shown in FIG. 5. The user may drag a window 522 upwards in the task control area 520 displayed on the foldable device 10. The window 522 may be a thumbnail window corresponding to an actual task window 620 currently displayed on the screen C. Therefore, an operation of dragging the window 522 upwards shown in FIG. 6c may indicate the foldable device 10 to display the actual task window 620 on the screen B, or adjust the actual task window 620 to the screen B for display. The window 522 in the task control area 520 may be the thumbnail window of the actual task window 620. The window 522 and the window 521 may be a same thumbnail window, or may be different thumbnail windows. Correspondingly, the actual task window 620 may be a same task window, or may be different task windows. This is not limited herein.

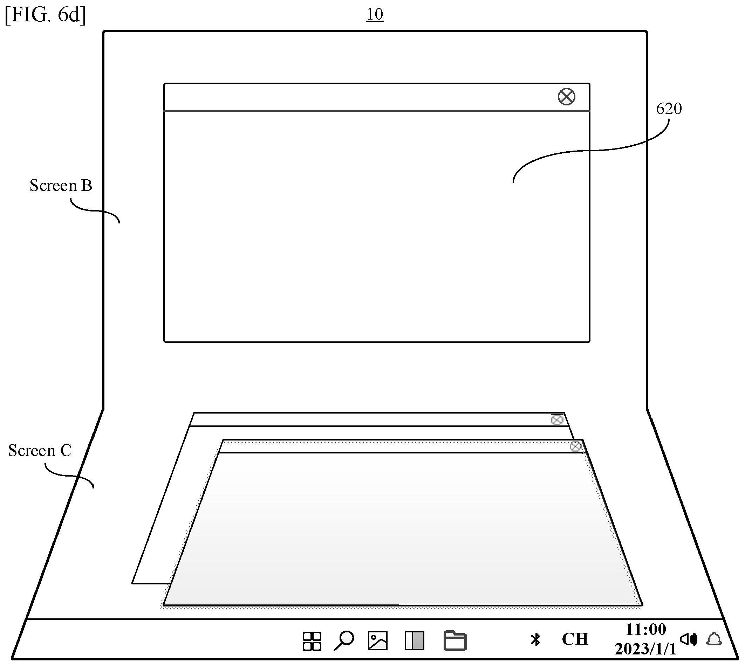

It may be understood that, when detecting that a distance by which the user drags the window 522 upwards exceeds the first preset distance, the foldable device 10 may determine to display, on the screen B, the actual task window 620 corresponding to the window 522. In this case, the foldable device 10 may continue to display an interface shown in FIG. 6d.

Refer to FIG. 6d. In response to the third user operation of dragging the thumbnail window in the task control area downwards by the user, the foldable device 10 may display, on the screen B, the actual task window 620 corresponding to the thumbnail window. In this case, the user may continue to perform another operation in the actual task window 620 displayed on the screen B, to implement interaction with an application corresponding to the actual task window 620.

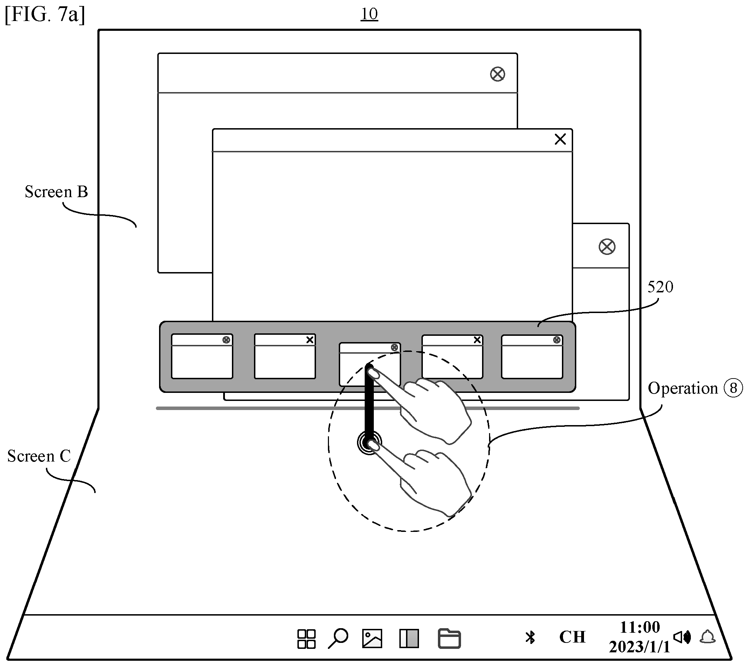

FIG. 7a to FIG. 7c are diagrams of an interface change process triggered by another operation manner of the third user operation according to an embodiment of this application.

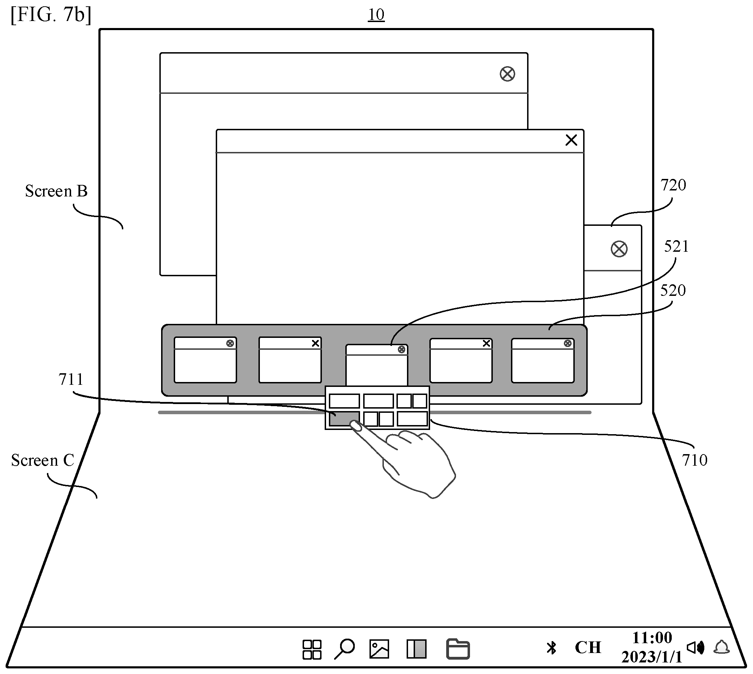

Refer to FIG. 7a. After performing step 403 and detecting the second user operation, the foldable device 10 may display a task control area 520 shown in FIG. 7a, that is, the task control area 520 shown in FIG. 5. Refer to an operation ⑧ shown in FIG. 7a. The user may drag the window 521 in the task control area 520 displayed on the foldable device 10 to move downwards by a distance and then hover. The operation ⑧ may trigger the foldable device 10 to display a layout menu. For a form of the layout menu, refer to a layout menu 710 shown in FIG. 7b below.

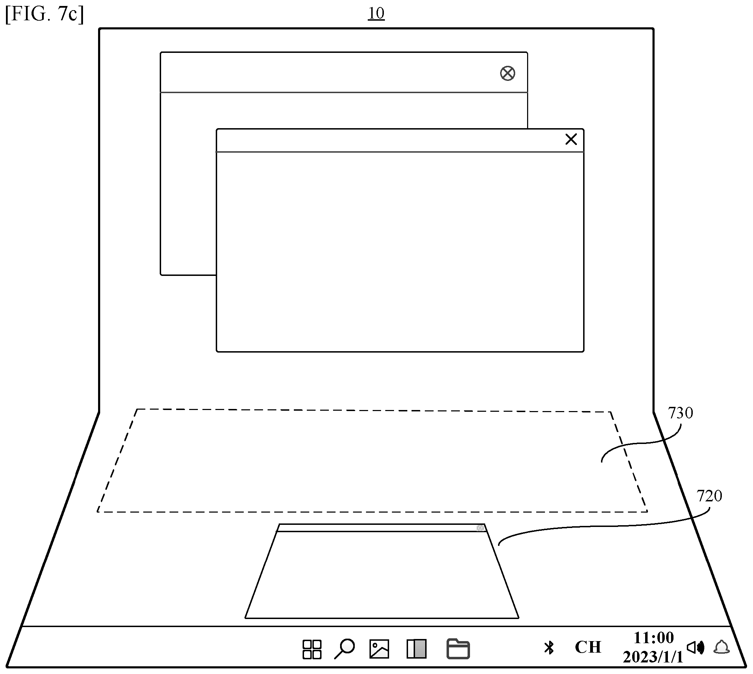

Refer to FIG. 7b. In response to the operation ⑧, the foldable device 10 displays the layout menu 710 above a layer at which the task control area 520 is located. As shown in FIG. 7b, the layout menu 710 may be displayed below the dragged window 521 in response to a downward movement operation in the operation ⑧. A plurality of recommended layout manners may be displayed in the layout menu 710, and each layout manner may control a display area, in the lower screen C, of an actual task window 720 corresponding to the window 521. For example, the user may click a recommended window 711 in the layout menu 710 shown in FIG. 7b. In response to an operation of selecting the recommended window 711 by the user, the foldable device 10 may display the actual task window 720 in a lower area of the screen C. Refer to a display location of the actual task window 720 in the screen C shown in FIG. 7c. The window 521 may be a thumbnail window corresponding to the actual task window 720 displayed on the screen B shown in FIG. 7a and FIG. 7b. The window 720 may be the same as or different from the actual task window 610. This is not limited herein.

Continue to refer to FIG. 7c. An upper area 730 of the screen C of the foldable device 10 may display a task window corresponding to another application that is originally displayed, for example, an input method soft keyboard window, or may not display another task window.

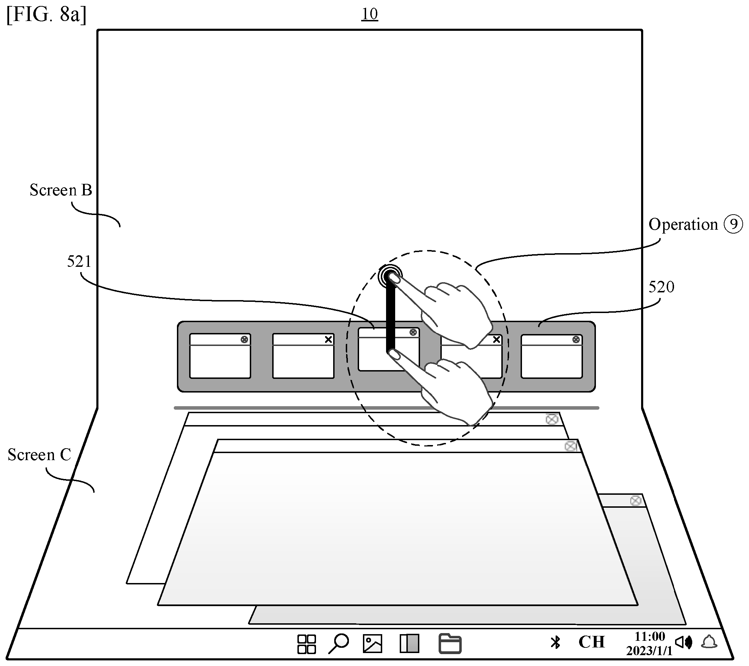

FIG. 8a to FIG. 8c are diagrams of an interface change process triggered by still another operation manner of the third user operation according to an embodiment of this application.

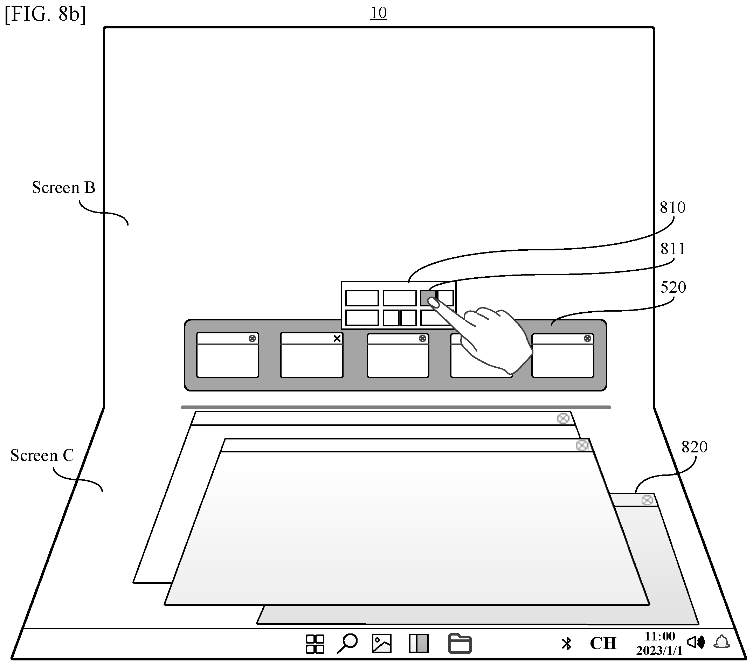

Refer to FIG. 8a. After performing step 403 and detecting the second user operation, the foldable device 10 may display a task control area 520 shown in FIG. 8a, that is, the task control area 520 shown in FIG. 5. Refer to an operation ⑨ shown in FIG. 8a. The user may drag the window 521 in the task control area 520 displayed on the foldable device 10 upwards by a distance and then hover. The operation ⑨ may trigger the foldable device 10 to display a layout menu. For a form of the layout menu, refer to a layout menu 810 shown in FIG. 8b below.

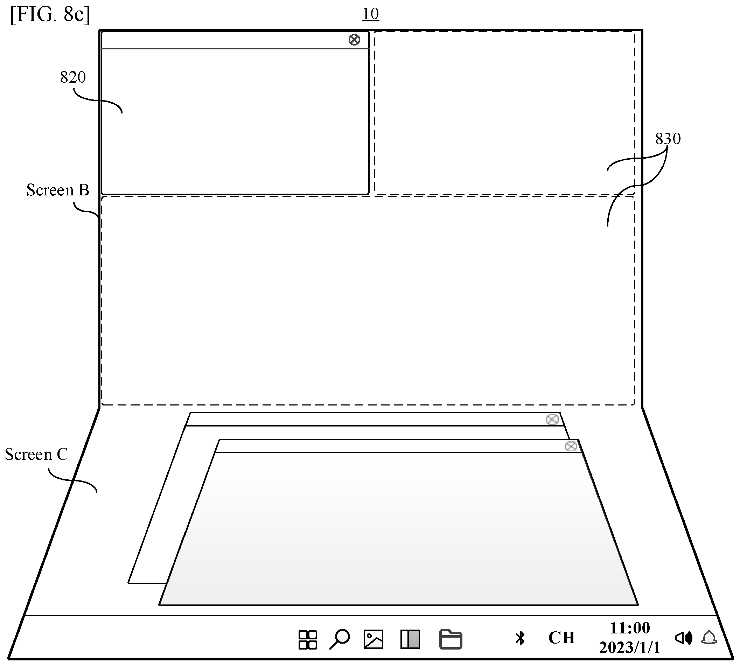

Refer to FIG. 8b. In response to the operation ⑨, the foldable device 10 displays the layout menu 810 above the layer at which the task control area 520 is located. As shown in FIG. 8b, the layout menu 810 may be displayed below the dragged window 521 in response to an upward movement operation in the operation ⑨. A plurality of recommended layout manners may be displayed in the layout menu 810, and each layout manner may control a display area, in the upper screen B, of an actual task window 820 corresponding to the window 521. For example, the user may click a recommended window 811 in the layout menu 810 shown in FIG. 8b. In response to an operation of selecting the recommended window 811 by the user, the foldable device 10 may display the actual task window 820 in an upper left area of the screen B. Refer to a display location of the actual task window 820 in the screen B shown in FIG. 8c. The window 521 may be a thumbnail window corresponding to the actual task window 820 displayed on the screen C shown in FIG. 8a and FIG. 8b. The window 820 may be the same as or different from the actual task window 610. This is not limited herein.

Continue to refer to FIG. 8c. An upper right and lower display areas 830 of the screen B of the foldable device 10 may display a task window corresponding to another application that is originally displayed, for example, an input method soft keyboard window, or may not display another task window.

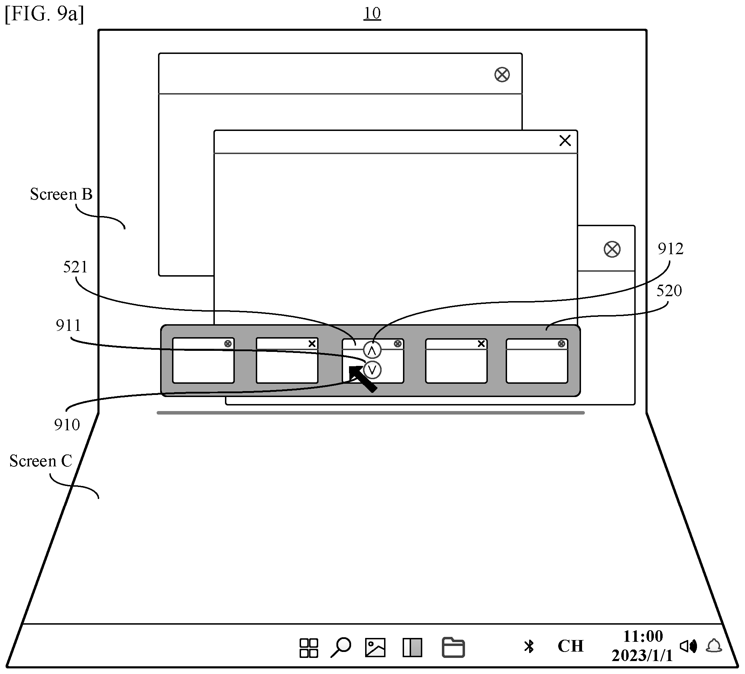

FIG. 9a to FIG. 9f are diagrams of an interface change process triggered by yet another operation manner of the third user operation according to an embodiment of this application.

Refer to FIG. 9a. After performing step 403 and detecting the second user operation, the foldable device 10 may display a task control area 520 shown in FIG. 9a, that is, the task control area 520 shown in FIG. 5. As shown in FIG. 9a, the user may operate a mouse 910 to place the mouse 910 on the window 521 in the task control area 520 and hover the mouse 910. In this case, the foldable device 10 may display a layout control 911 and a layout control 912 on the window 521 in response to a mouse hovering operation. The layout control 911 may be configured to adjust an actual task window corresponding to the window 521 to be displayed on the lower screen C, and may also be described as a down-direction control. The layout control 912 may be configured to adjust the actual task window corresponding to the window 521 to be displayed on the upper screen B, and may also be described as an up-direction control.

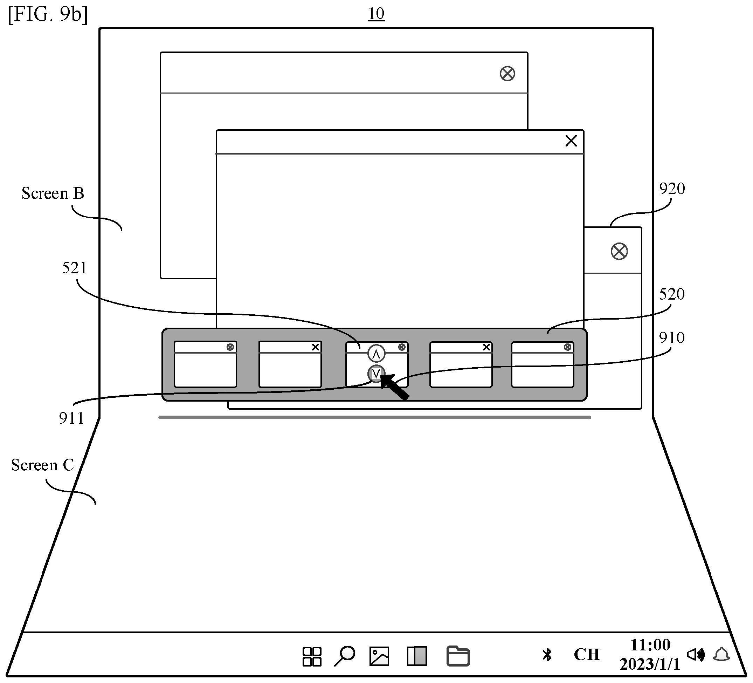

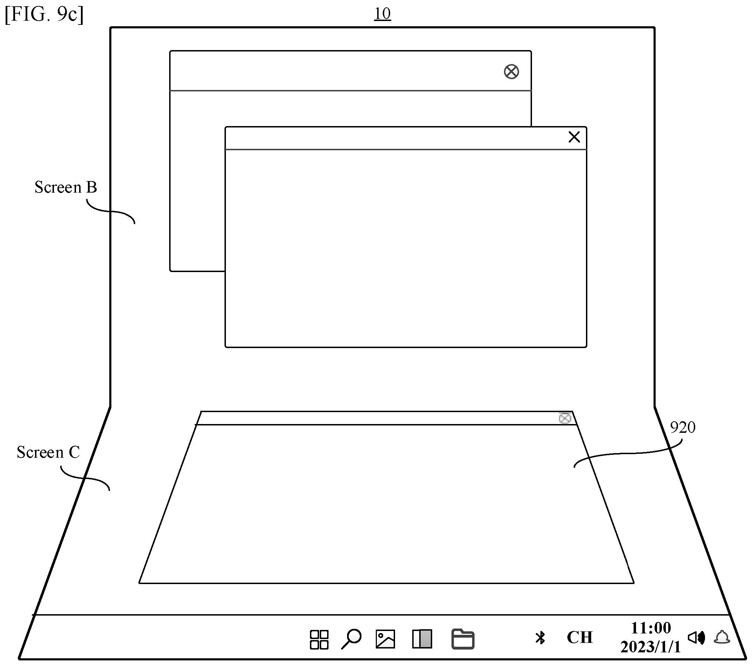

Continue to refer to FIG. 9b. The user may operate the mouse 910 to click the layout control 911 displayed on the foldable device 10. Correspondingly, in response to a mouse click operation, the foldable device 10 may control an actual task window 920 corresponding to the window 521 to be displayed on the screen C indicated by the layout control 911. Refer to the actual task window 920 displayed on the screen C shown in FIG. 9c. It may be understood that the actual task window 920 may originally be a window displayed on the screen B. In some other embodiments, the actual task window 920 may originally be a window displayed on the screen C.

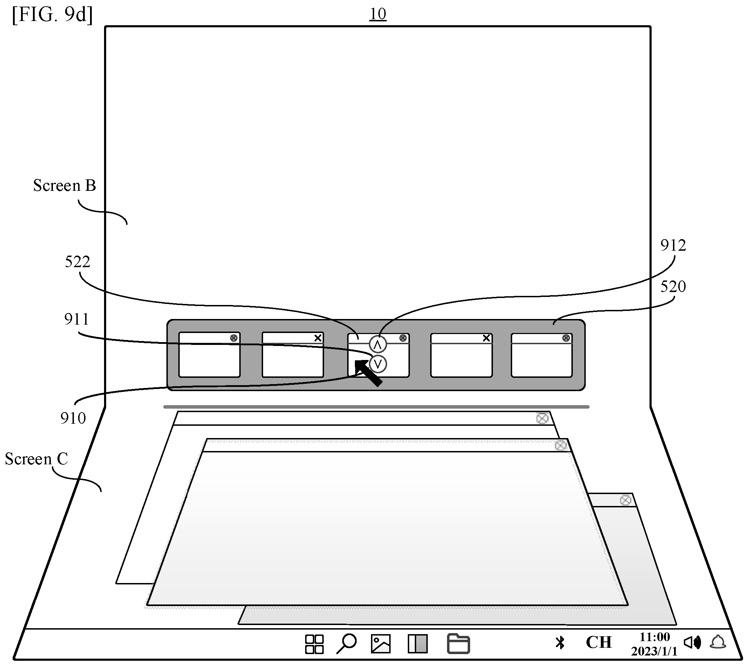

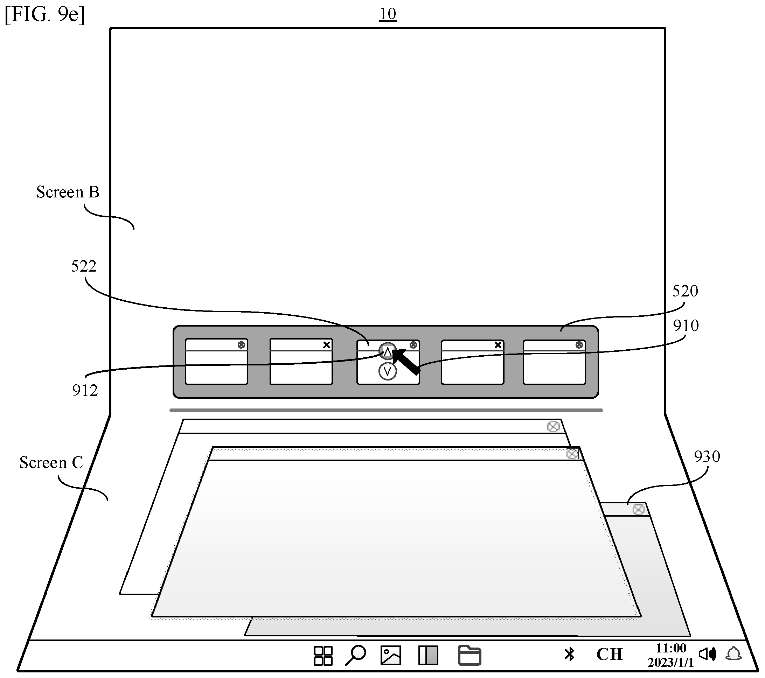

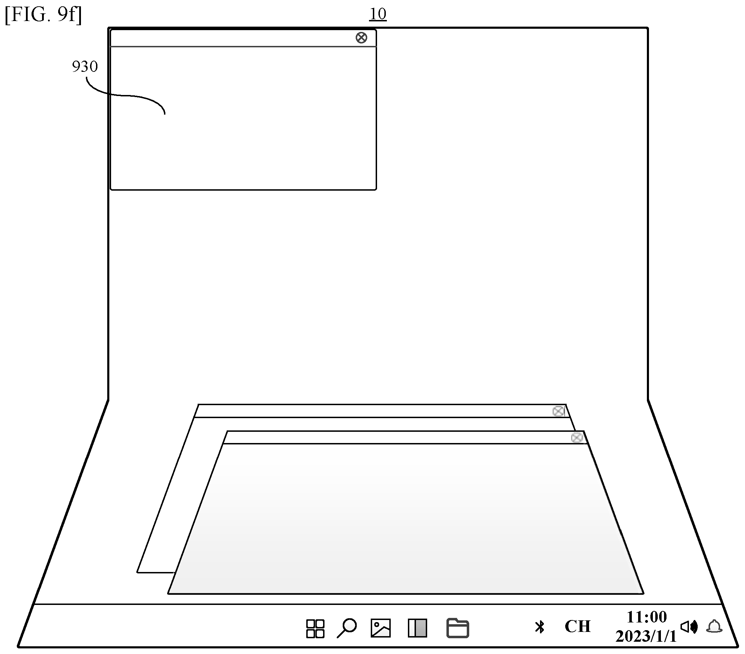

Continue to refer to FIG. 9d. The user may operate the mouse to place the mouse on the window 522 in the task control area 520 and hover the mouse. In this case, the foldable device 10 may display the layout control 911 and the layout control 912 on the window 522 in response to a mouse hovering operation. In this case, as shown in FIG. 9e, the user may operate the mouse 910 to click the layout control 912 displayed on the foldable device 10. Correspondingly, as shown in FIG. 9f, in response to a mouse click operation, the foldable device 10 may control an actual task window 930 corresponding to the window 522 to be displayed on the screen B indicated by the layout control 912. Refer to the actual task window 930 displayed on the screen B shown in FIG. 9f. It may be understood that the actual task window 930 may originally be a window displayed on the screen C. In some other embodiments, the actual task window 930 may originally be a window displayed on the screen B.

It may be understood that, in some embodiments, before adjusting, in response to the third user operation, an actual task window corresponding to a thumbnail window of the task control area operated by the user to the screen C for display, the foldable device 10 may not display another window. In this case, the foldable device 10 may display, in response to the third user operation, a related actual task window in a screen central area of the screen C, and the actual task window may be adaptively enlarged for display based on a size of the screen C.

In some other embodiments, before displaying the actual task window indicated by the third user operation, the screen C of the foldable device 10 may also display an input method soft keyboard or a task window of another application. In this case, in response to the third user operation, the foldable device 10 may reduce a size of the input method soft keyboard or the task window of another application originally displayed on the screen C, and display, in an area in which no other window is currently displayed on the screen C, the actual task window indicated by the third user operation. In some other embodiments, in response to the third user operation, the foldable device 10 may further display the actual task window indicated by the third user operation above a task window of the input method soft keyboard or the another application originally displayed on the screen C; control a display area of the actual task window to partially overlap a display area of the task window of the input method soft keyboard or the another application; or the like. This is not limited herein. The actual task window may include the actual task window 610, the actual task window 720, the actual task window 920, and the like. This is not limited herein.

Similarly, in some embodiments, before displaying the actual task window indicated by the third user operation, the screen B of the foldable device 10 may not display another window. In this case, in response to the third user operation, the foldable device 10 may control to display, in a screen central area of the screen B, the actual task window indicated by the third user operation, and the actual task window may be adaptively enlarged for display based on a size of the screen B.

In some other embodiments, before displaying the actual task window indicated by the third user operation, the screen B of the foldable device 10 may also display a task window of another application. In this case, in response to the third user operation, the foldable device 10 may reduce a size of the task window of the another application originally displayed on the screen B, and display, in an area in which no other window is currently displayed on the screen B, the actual task window indicated by the third user operation. In some other embodiments, in response to the third user operation, the foldable device 10 may further display the actual task window indicated by the third user operation above a task window of the another application originally displayed on the screen B; control a display area of the actual task window to partially overlap a display area of the task window of the another application; or the like. This is not limited herein. The actual task window may include the actual task window 610, the actual task window 720, the actual task window 920, and the like. This is not limited herein.

It may be understood that, based on the implementation procedure of step 401 to step 406 shown in FIG. 4, and the operation manners of the third user operation and the related interface change processes shown in FIG. 6a to FIG. 6d, FIG. 7a to FIG. 7c, FIG. 8a to FIG. 8c, and FIG. 9a to FIG. 9f, when the interaction method provided in this embodiment of this application is applied to the foldable device 10, a more convenient cross-screen operation service such as cross-screen adjustment of a window display location may be provided for the user. In addition, the task control area is displayed near the screen folding shaft of the foldable device 10 or displayed on the lower screen C when the foldable device 10 in the half-unfolded state, which can effectively avoid a problem that the device is prone to tilt when the user applies pressure during a sliding operation on a screen of the foldable device 10.

The following first describes in detail a specific implementation process of the interaction method provided in this application in a scenario in which an external extended display screen is connected with reference to Embodiment 2.

### Embodiment 2

An embodiment of this application provides a specific implementation process of the interaction method applied to a scenario in which an electronic device is externally connected to an extended display screen. The electronic device may include an electronic device such as a mobile phone, a tablet, a notebook computer, a desktop computer, or a large-screen device. The electronic device may be a foldable device, or may be an electronic device having an inflexible display screen. This is not limited herein.

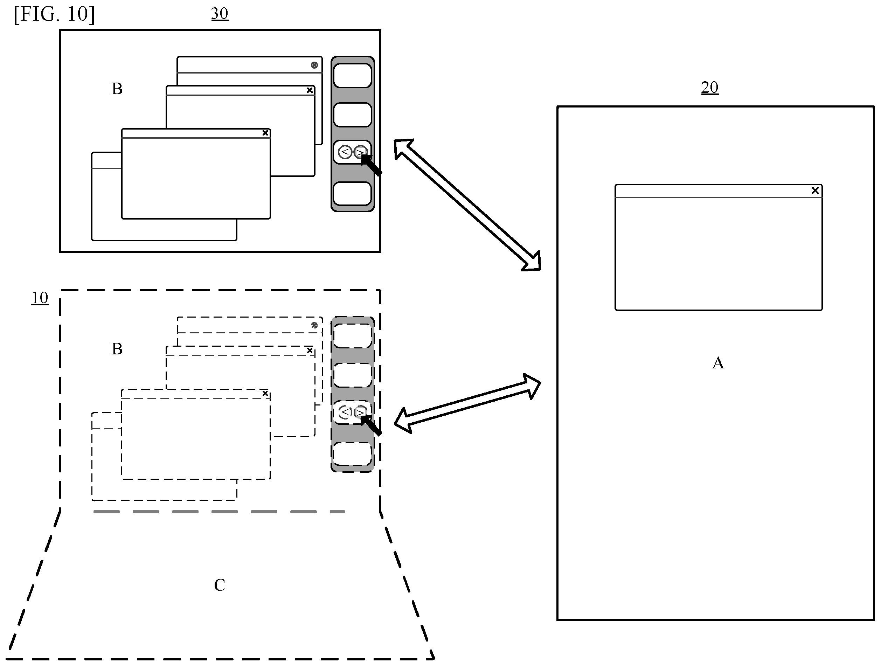

FIG. 10 is a diagram of a scenario in which an electronic device is externally connected to an extended display screen according to an embodiment of this application.

As shown in FIG. 10, the scenario includes an electronic device 30 and an externally connected extended display screen 20. The extended display screen 20 may be connected to the electronic device 30 and provide an extended screen display area for the electronic device 30, to facilitate use by a user.

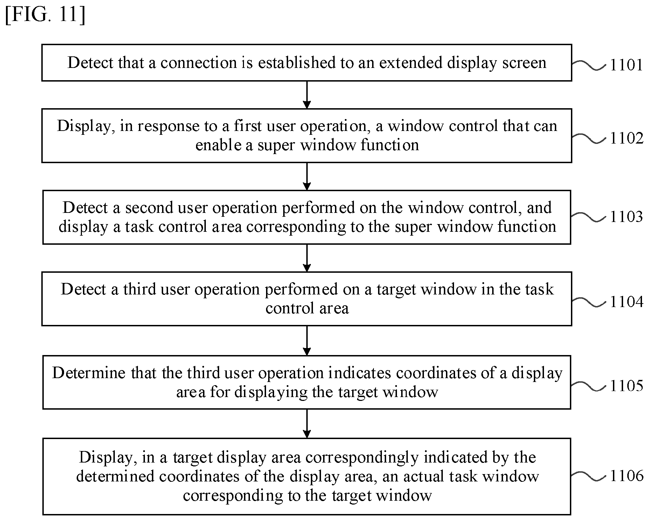

FIG. 11 is a diagram of an implementation procedure of an interaction method according to an embodiment of this application. It may be understood that the steps in the procedure shown in FIG. 11 may be performed by the electronic device 30. As described above, the electronic device 30 may be the foregoing tablet, notebook computer, desktop computer, large-screen device, or the like; or may be the foldable device 10. This is not limited herein.

Specifically, as shown in FIG. 11, the implementation procedure may include the following steps.

1101: Detect that a connection is established to the extended display screen.

For example, the electronic device 30 may establish the connection to the extended display screen 20 through a data line. An interface type of the data line may include a high-definition multimedia interface (high-definition multimedia interface, HDMI), a mini HDMI, a micro HDMI, a universal serial bus (universal serial bus, USB), or the like. In some other embodiments, a data connection may also be established between the electronic device 30 and the extended display screen 20 in a wireless communication manner. This is not limited herein.

It may be understood that after the electronic device 30 establishes the connection to the extended display screen 20, display data related to a window or an interface may be transmitted between the electronic device 30 and the extended display screen 20, to display task windows of some application programs running on the electronic device 30.

1102: Display, in response to a first user operation, a window control that can enable a super window function.

For the first user operation, refer to the operation of opening the control center 510 in the taskbar shown in FIG. 5 in Embodiment 1. For a specific detailed process in which the electronic device 30 performs step 1102, refer to related descriptions of step 402 in Embodiment 1. Details are not described herein again.

1103: Detect a second user operation performed on the window control, and display a task control area corresponding to the super window function.

For the first user operation, refer to the operation of clicking the window control 511 shown in FIG. 5 in Embodiment 1. For a specific detailed process in which the electronic device 30 performs step 1103, refer to related descriptions of step 403 in Embodiment 1. Details are not described herein again.

1104: Detect a third user operation performed on a target window in the task control area.

For example, for a display location and a style corresponding to the task control area in this embodiment of this application, refer to the display location and the style shown in FIG. 2d. For a specific operation manner of the third user operation, refer to related descriptions of clicking a right-direction control or left-direction control shown in FIG. 2d. Details are not described herein again.

For a specific detailed process in which the electronic device 30 performs step 1104, refer to related descriptions of step 404 in Embodiment 1. Details are not described herein again.

1105: Determine that the third user operation indicates coordinates of a display area for displaying the target window.

For example, in this embodiment of this application, the coordinates of the display area for displaying the target window that are indicated by the third user operation may be located on a screen A of the extended display screen 20 in the scenario shown in FIG. 10, or may be located on the screen B of the electronic device 30, or may be located on the screen C of the foldable device 10. This is not limited herein.

For a specific detailed process in which the electronic device 30 performs step 1105, refer to related descriptions of step 405 in Embodiment 1. Details are not described herein again.

1106: Display, in a target display area correspondingly indicated by the determined coordinates of the display area, an actual task window corresponding to the target window.

For a detailed process in which the electronic device 30 performs step 1106, refer to related descriptions of step 406 in Embodiment 1. Details are not described herein again.

It may be understood that, based on the implementation procedure of step 1101 to step 1106 shown in FIG. 11, when the interaction method provided in this embodiment of this application is applied to another electronic device different from the foldable device 10, a more convenient cross-screen operation service such as cross-screen adjustment of a window display location may be provided for a user, so that the user can conveniently switch between the local display screen of the electronic device 30 and the extended display screen 20 to display the actual task window. In addition, when the electronic device 30 is the foldable device 10, the user can also conveniently transfer the actual task window displayed on the foldable device 10 to the extended display screen 20 for display. In this scenario, the interaction method provided in this application can effectively avoid a problem that the device is prone to tilt when the user performs a sliding operation on a screen of the foldable device 10.

The following describes, with reference to related accompanying drawings, examples of a software structure and a hardware structure of an operating system of an electronic device to which the interaction method provided in embodiments of this application is applied.

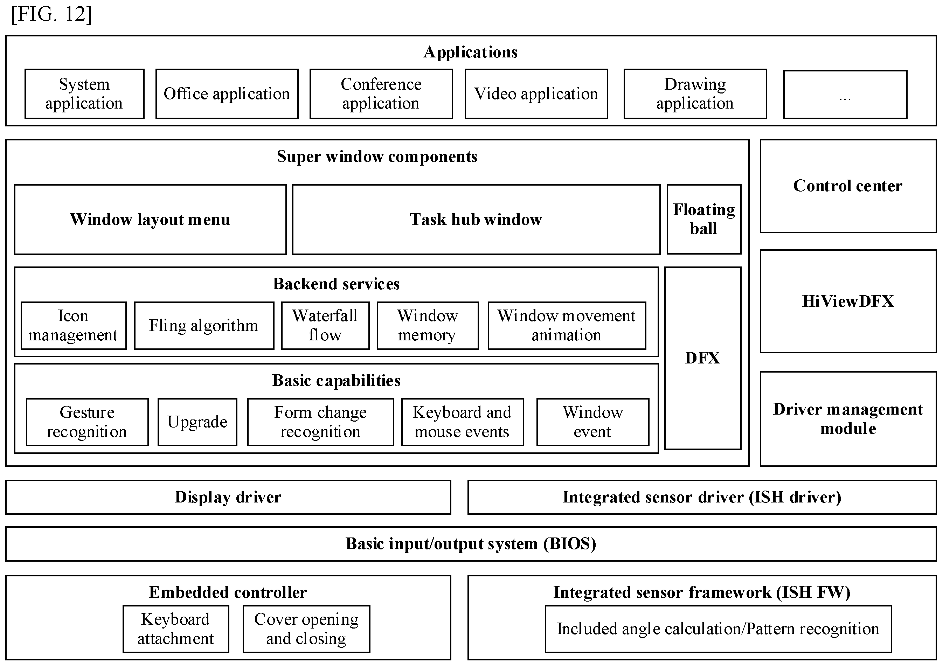

FIG. 12 is a diagram of a software structure of an operating system according to an embodiment of this application.

It may be understood that an operating system of the electronic device 30 may use a layered architecture, an event-driven architecture, a microkernel architecture, a micro service architecture, or a cloud architecture. In this embodiment of this application, a Windows^{™} system with a layered architecture is used as an example to describe a system software structure of the electronic device 30.

In a layered architecture, software is divided into several layers, and each layer has a clear role and task. The layers communicate with each other through a software interface.

The Windows^{™} operating system can be generally divided into a kernel mode (kernel model) and a user mode (user model).

The user mode may include application programs such as a system application, an office application, a conference application, a video application, and a creation application shown in FIG. 12. An application program in the user mode may invoke a core capability set, a driver, and the like in the kernel mode via a Windows subsystem and a native application programming interface (native application programming interface, native API).

Still refer to FIG. 12. The kernel mode may provide a super window component, a control center, a driver management module, and the like. The super window component may provide a window layout management capability for the electronic device 30. The component may integrate capability components such as a window layout menu, a task hub window, and a floating ball.

The task hub window may correspond to a window displayed in the task control area. The user may operate a thumbnail window in the task hub window to adjust a display location of a corresponding actual task window. The task hub window is a core window of the super window component; and may provide a capability of displaying the thumbnail window corresponding to the actual task window, and provide a convenient layout capability such as adjusting a layout of the actual task window based on up and down sliding performed on the thumbnail window. In some other embodiments, an identification image such as an icon of a related application or a window icon may be displayed in the task hub window or the task control area. This is not limited herein.

The window layout menu may be used to display a layout menu of a target window when a trigger condition is met. For example, when a drag operation of moving and hovering the target window by the user is detected in the task hub window, a quick layout menu is displayed, so that the user can quickly preview a layout effect. A real-time layout is, for example, the layout menu 221 or the layout menu 222 shown in FIG. 2b, the layout menu 710 shown in FIG. 7b, or the layout menu 810 shown in FIG. 8b.

The floating ball may be configured to provide a convenient entry for collapsing and expanding the task hub window, and the floating ball may be closed in the control center.

The control center may be configured to provide a switch entry for a super window function, for example, provide a switch entry for the super window function by displaying the window control 511.

The driver management module may be configured to manage various drivers, including the following display driver, integrated sensor driver, and the like, for example, providing a driver version installation and upgrade capability.

The super window component may further include a plug-in for a design for all phases of a product lifecycle (design for X, DFX), which may provide a design capability (DFX capability for short) for the super window for all the phases of the product lifecycle. The electronic device may provide the DFX capability for the super window component via a HiViewDFX plug-in (a DFX plug-in).

Still refer to FIG. 12. The kernel mode of the Windows^{™} operating system may further include the integrated sensor driver (integrated sensor driver, ISH driver), the display driver, and the like. The ISH driver may provide a device form switching notification. For example, when the electronic device 30 is a foldable device, the ISH driver may provide a notification related to form switching of the foldable device, for example, entering a half-unfolded state from a folded state, or entering a half-unfolded state from an unfolded state.

Still refer to FIG. 12. The kernel mode of the Windows^{™} operating system may further provide a basic capability component and a backend service component.

The basic capability component includes capabilities such as gesture recognition, upgrade, form change recognition, and listening to keyboard and mouse events and window events. These basic capability components can provide basic capabilities for capability components such as the backend service, the window layout menu, the task hub window, and the floating ball.

The backend service component may provide backend feature service logic processing, for example, feature service logic processing such as icon management, a fling algorithm, a waterfall flow, window memory, and a window movement animation.

Still refer to FIG. 12. The kernel mode of the Windows^{™} operating system may further include a basic input/output system (basic input/output system, BIOS), configured to receive an input/output signal and a computing perception result provided by an embedded controller (embedded controller, EC, also referred to as an EC chip), an integrated sensor framework (integrated sensor framework, ISH FW), and the like, including an attachment signal of a keyboard accessed by the electronic device 30, a cover opening and closing signal of a foldable device and the like, and a computing perception result determined by the ISH FW by performing, for example, included angle calculation and pattern recognition, based on information of sensors such as a gyroscope sensor and an acceleration sensor. Details are not described herein again.

The following uses a Harmony^{™} system with a layered architecture as an example to describe the system software structure of the electronic device 30.

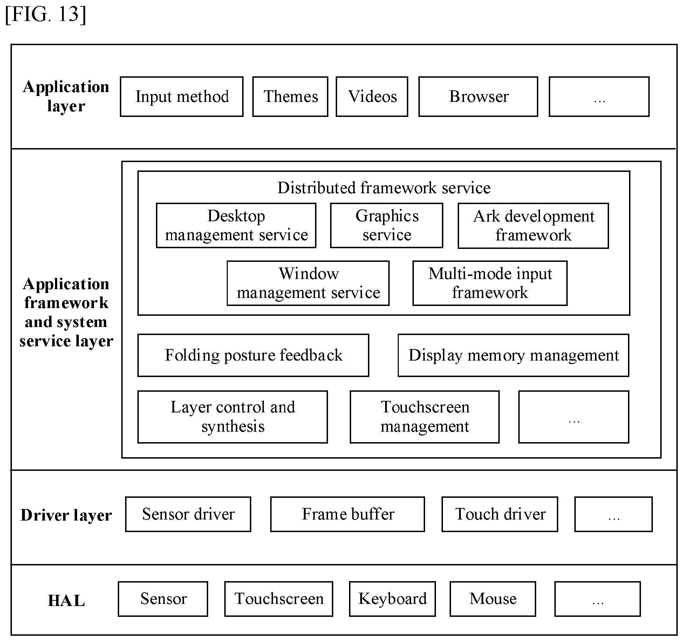

FIG. 13 is a diagram of another software structure of an operating system according to an embodiment of this application.

As shown in FIG. 13, the electronic device 30 may be equipped with a distributed system, for example, a Harmony^{™} operating system (Harmony^{™}OS). The distributed system may use a layered architecture, and may include an application layer (application layer), an application framework and system service layer (framework and system service layer), a driver layer (driver layer), and a hardware abstraction layer (hardware abstraction layer, HAL).

The application layer may include a series of application packages. The application package may be a system application package, an office application package, a conference application package, a video application package, a creation application package, or the like, for example, an application package including applications such as an input method, a theme application, a video application, and a browser application. This is not limited herein.

The application framework and system service layer may provide a distributed framework service for the application layer. A system service is a core of a distributed operating system, and may provide services for an application and an SDK at the application layer via an application framework. The distributed framework service may include a desktop management service, a window management service, a graphics service, an Ark development framework, and a multi-mode input framework. The desktop management service may determine, based on posture recognition of a foldable device, a finger touch and control event, and the like, whether an operation gesture for cross-screen adjustment of a window display location is detected, and notify the window management service.

The window management service may manage, based on the detected operation gesture for cross-screen adjustment of the window display location, an actual task window corresponding to a target window to be cross-screen displayed on a screen part indicated by the operation gesture, and perform cross-screen window layout processing.

The application framework and system service layer may further include system services such as folding posture feedback, layer control and synthesis, display memory management, and touchscreen management. The touchscreen management may be used to report a corresponding touch event operated by a user on a touchscreen by using a finger, for example, report the touch event to the desktop management service.

The driver layer may also be referred to as a kernel layer, and may include various drivers, configured to control hardware devices controlled by the hardware abstraction layer to implement related functions. In this embodiment of this application, the driver layer may include a sensor driver, a frame buffer (frame buffer, a display device driver), a touch driver, and the like.

The hardware abstraction layer (HAL) is an interface layer located between an operating system kernel and a hardware circuit, and is configured to abstract a hardware device. In this embodiment of this application, an abstracted hardware device in the HAL may include a sensor or a sensor module, a touchscreen, a keyboard, a mouse, or the like. This is not limited herein.

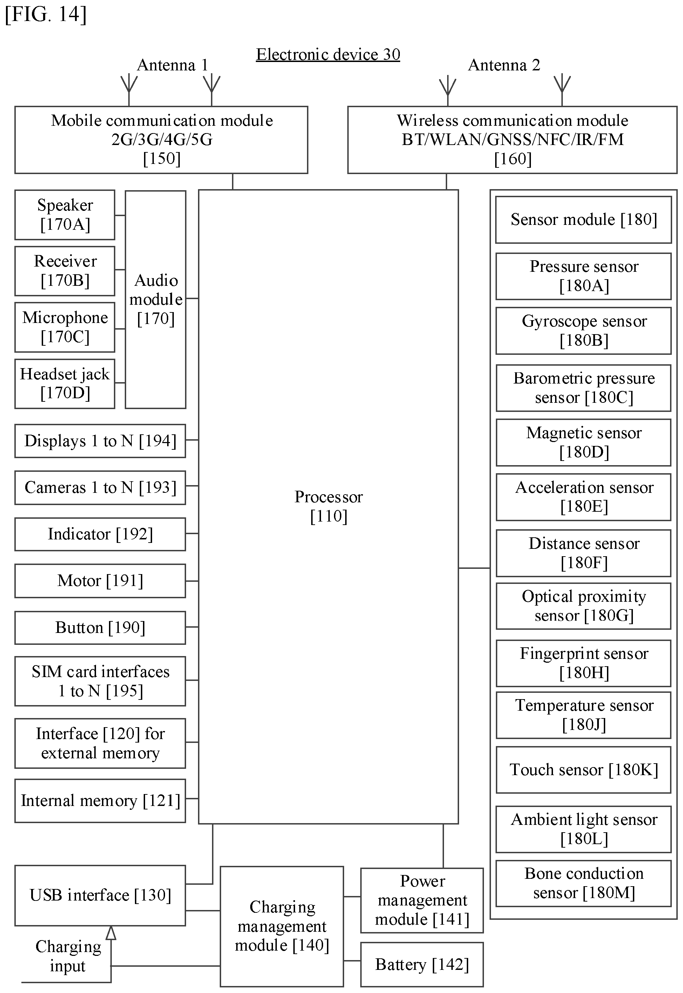

FIG. 14 is a diagram of a hardware structure of an electronic device according to an embodiment of this application.

As shown in FIG. 14, an electronic device 30 may include a processor 110, an interface 120 for external memory, an internal memory 121, a universal serial bus (USB) interface 130, a charging management module 140, a power management module 141, a battery 142, an antenna 1, an antenna 2, a mobile communication module 150, a wireless communication module 160, an audio module 170, a speaker 170A, a receiver 170B, a microphone 170C, a headset jack 170D, a sensor module 180, a button 190, a motor 191, an indicator 192, a camera 193, a display 194, a subscriber identity module (subscriber identity module, SIM) card interface 195, and the like. The sensor module 180 may include a pressure sensor 180A, a gyroscope sensor 180B, a barometric pressure sensor 180C, a magnetic sensor 180D, an acceleration sensor 180E, a distance sensor 180F, an optical proximity sensor 180G, a fingerprint sensor 180H, a temperature sensor 180J, a touch sensor 180K, an ambient light sensor 180L, a bone conduction sensor 180M, and the like.

It may be understood that the structure shown in this embodiment of the present invention does not constitute a specific limitation on the electronic device 30. In some other embodiments of this application, the electronic device 30 may include more or fewer components than those shown in the figure, or some components may be combined, or some components may be split, or different component arrangements may be used. The components shown in the figure may be implemented through hardware, software, or a combination of software and hardware.

The processor 110 may include one or more processing units. For example, the processor 110 may include an application processor (application processor, AP), a modem processor, a graphics processing unit (graphics processing unit, GPU), an image signal processor (image signal processor, ISP), a controller, a video codec, a digital signal processor (digital signal processor, DSP), a baseband processor, a neural-network processing unit (neural-network processing unit, NPU), and/or the like. Different processing units may be independent components, or may be integrated into one or more processors.

The controller may generate an operation control signal based on an instruction operation code and a time sequence signal, to complete control of instruction fetching and instruction execution.

A memory may be further disposed in the processor 110, and is configured to store instructions and data. In some embodiments, the memory in the processor 110 is a cache. The memory may store instructions or data just used or cyclically used by the processor 110. If the processor 110 needs to use the instructions or the data again, the processor 110 may directly invoke the instructions or the data from the foregoing memory. This avoids repeated access, reduces waiting time of the processor 110, and improves system efficiency.

In this embodiment of this application, the processor 110 may complete, by using the controller, control of obtaining instructions from the memory and executing the instructions, so that the electronic device 30 implements the steps in the implementation procedure shown in FIG. 4 provided in Embodiment 1 or the steps in the implementation procedure shown in FIG. 11 provided in Embodiment 2, to implement the interaction method provided in this application.

In some embodiments, the processor 110 may include one or more interfaces. The interface may include an inter-integrated circuit (inter-integrated circuit, I2C) interface, an inter-integrated circuit sound (inter-integrated circuit sound, I2S) interface, a pulse code modulation (pulse code modulation, PCM) interface, a universal asynchronous receiver/transmitter (universal asynchronous receiver/transmitter, UART) interface, a mobile industry processor interface (mobile industry processor interface, MIPI), a general-purpose input/output (general-purpose input/output, GPIO) interface, an SIM card interface, a universal serial bus (universal serial bus, USB) interface, and/or the like.

It may be understood that an interface connection relationship between the modules shown in this embodiment of the present invention is merely an example for description, and does not constitute a limitation on the structure of the electronic device 30. In some other embodiments of this application, different interface connection manners in the foregoing embodiments or a combination of a plurality of interface connection manners may alternatively be used for the electronic device 30.

A wireless communication function of the electronic device 30 may be implemented through the antenna 1, the antenna 2, the mobile communication module 150, the wireless communication module 160, the modem processor, the baseband processor, and the like.

The electronic device 30 may implement a display function through the GPU, the display 194, the application processor, and the like. The GPU is a microprocessor for image processing, and is connected to the display 194 and the application processor. The GPU is configured to: perform mathematical and geometric computation, and render an image. The processor 110 may include one or more GPUs, which execute program instructions to generate or change display information.

The display 194 is configured to display an image, a video, and the like. The display 194 includes a display panel. In this embodiment of this application, the display 194 of the electronic device 30 may include the screen B and the screen C of the foldable device 10 in the half-unfolded state, and the like. In some embodiments, the electronic device 30 may include one or N displays 194, where N is a positive integer greater than 1.

The interface 120 for external memory may be used to connect to an external memory card, for example, a micro SD card, to extend a storage capability of the electronic device 30. The external memory card communicates with the processor 110 through the interface 120 for external memory, to implement a data storage function. For example, files such as music and videos are stored in the external memory card.

The internal memory 121 may be configured to store computer-executable program code. The executable program code includes instructions. The internal memory 121 may include a program storage area and a data storage area. The program storage area may store an operating system, an application required by at least one function (for example, a sound playing function or an image playing function), and the like. The data storage area may store data (for example, audio data or a phone book) created during use of the electronic device 30, and the like. In addition, the internal memory 121 may include a high-speed random access memory, and may also include a non-volatile memory, for example, at least one magnetic disk storage device, a flash memory, or a universal flash storage (universal flash storage, UFS). The processor 110 runs instructions stored in the internal memory 121 and/or instructions stored in the memory disposed in the processor, to perform various function applications and data processing of the electronic device 30.

The electronic device 30 may implement audio functions by using the audio module 170, the speaker 170A, the receiver 170B, the microphone 170C, the headset jack 170D, and the application processor, for example, music playback, recording, and the like.

The pressure sensor 180A is configured to sense a pressure signal, and can convert the pressure signal into an electrical signal. In some embodiments, the pressure sensor 180A may be disposed on the display 194. There are a plurality of types of pressure sensors 180A, such as a resistive pressure sensor, an inductive pressure sensor, and a capacitive pressure sensor. The capacitive pressure sensor may include at least two parallel plates made of conductive materials. When force is applied to the pressure sensor 180A, capacitance between electrodes changes. The electronic device 30 determines pressure intensity based on the change of the capacitance. When a touch operation is performed on the display 194, the electronic device 30 detects intensity of the touch operation by using the pressure sensor 180A. The electronic device 30 may also calculate a touch location based on a detection signal of the pressure sensor 180A. In some embodiments, touch operations that are performed in a same touch location but have different touch operation intensity may correspond to different operation instructions.

The gyroscope sensor 180B may be configured to determine a moving posture of the electronic device 30. In some embodiments, angular velocities of the electronic device 30 around the three axes (that is, an x-axis, a y-axis, and a z-axis) may be determined by using the gyroscope sensor 180B. The gyroscope sensor 180B may be configured to implement image stabilization during photographing. For example, when a shutter is pressed, the gyroscope sensor 180B detects an angle at which the electronic device 30 jitters, calculates, based on the angle, a distance for which a lens module needs to compensate, and allows a lens to cancel the jitter of the electronic device 30 through reverse motion, to implement image stabilization. The gyroscope sensor 180B may also be used in a navigation scenario and a somatic game scenario.

The acceleration sensor 180E may detect values of acceleration of the electronic device 30 in all directions (usually on the three axes). When the electronic device 30 is still, a magnitude and a direction of gravity may be detected. The acceleration sensor 180E may be further configured to identify a posture of the electronic device, and is used in an application such as switching between a landscape mode and a portrait mode or a pedometer.

The touch sensor 180K is also referred to as a "touch component". The touch sensor 180K may be disposed on the display 194, and the touch sensor 180K and the display 194 constitute a touchscreen, which is also referred to as a "touch screen". The touch sensor 180K is configured to detect a touch operation performed on or near the touch sensor. The touch sensor may transfer the detected touch operation to the application processor to determine a type of a touch event. A visual output related to the touch operation may be provided through the display 194. In some other embodiments, the touch sensor 180K may also be disposed on a surface of the electronic device 30 at a location different from that of the display 194.

The button 190 includes a power button, a volume button, and the like. The button 190 may be a mechanical button, or may be a touch-sensitive button. The electronic device 30 may receive a key input, and generate a key signal input related to a user setting and function control of the electronic device 30.

The motor 191 may generate a vibration prompt. The motor 191 may be configured to provide an incoming call vibration prompt and a touch vibration feedback. For example, touch operations performed on different applications (for example, photographing and audio playing) may correspond to different vibration feedback effects. The motor 191 may also correspond to different vibration feedback effects for touch operations performed on different areas of the display 194. Different application scenarios (for example, a time reminder, information receiving, an alarm clock, and a game) may also correspond to different vibration feedback effects.

The indicator 192 may be an indicator light, and may be configured to indicate a charging status and a power change, or may be configured to indicate a message, a missed call, a notification, and the like.

The SIM card interface 195 is configured to connect to a SIM card. The SIM card may be inserted into the SIM card interface 195 or removed from the SIM card interface 195, to implement contact with or separation from the electronic device 30.

An embodiment of this application further provides a computer program product, configured to implement the interaction method provided in the foregoing embodiments.

Embodiments of a mechanism disclosed in this application may be implemented in hardware, software, firmware, or a combination of these implementation methods. Embodiments of this application may be implemented as a computer program module or module code executed in a programmable system. The programmable system includes at least one processor, a storage system (including a volatile memory, a nonvolatile memory, and/or a storage element), at least one input device, and at least one output device.

The computer program module or the module code may be used for instruction inputting, to execute functions described in this application and generate output information. The output information can be applied to one or more output devices in a known manner. For purposes of this application, a processing system includes any system having a processor, for example, a digital signal processor (digital signal processor, DSP), a microcontroller, an application-specific integrated circuit (application-specific integrated circuit, ASIC), or a microprocessor.

The module code may be implemented in a high-level modular language or an object-oriented programming language, to communicate with the processing system. The module code may alternatively be implemented in an assembly language or a machine language when necessary. The mechanism described in this application is actually not limited to the scope of any particular programming language. In any case, the language may be a compiled language or an interpretive language.

In some cases, the disclosed embodiments may be implemented in hardware, firmware, software, or any combination thereof. The disclosed embodiments may alternatively be implemented as instructions that are carried or stored on one or more transitory or non-transitory machine-readable (for example, computer-readable) storage media and that may be read and executed by one or more processors. For example, the instructions may be distributed over a network or through another computer-readable medium. Therefore, the machine-readable medium may include any mechanism for storing or transmitting information in a machine (for example, a computer)-readable form. The machine-readable medium includes but is not limited to a floppy disk, a compact disc, an optical disc, a magnetic optical disc, a read-only memory (read-only memory, ROM), a random access memory (random access memory, RAM), an erasable programmable read-only memory (erasable programmable read-only memory, EPROM), an electrically erasable programmable read-only memory (electrically erasable programmable read-only memory, EEPROM), a magnetic card, an optical card, a flash memory, or a tangible machine-readable memory used to transmit information (for example, a carrier, an infrared signal, or a digital signal) by using a propagating signal in an electrical, optical, acoustic, or another form over the Internet. Therefore, the machine-readable medium includes any type of machine-readable medium that is suitable for storing or transmitting electronic instructions or information in a machine (for example, a computer)-readable form.

Reference to "one embodiment" or "an embodiment" in the specification means that specific features, structures, or characteristics described with reference to the embodiment are included in at least one example implementation solution or technology disclosed according to this embodiment of this application. The phrase "in one embodiment" appearing in various places in the specification does not necessarily all mean a same embodiment.

The disclosure of embodiments of this application further relates to an apparatus for performing operations in the text. The apparatus may be constructed dedicatedly for the required purpose or may include a general-purpose computer that is selectively activated or reconfigured by a computer program stored in the computer. Such a computer program may be stored on a computer-readable medium, such as but not limited to, any type of disk, including a floppy disk, an optical disc, a CD-ROM, a magneto-optical disk, a read only memory (ROM), a random access memory (RAM), an EPROM, an EEPROM, a magnetic or optical card, an application-specific integrated circuit (ASIC), and any type of medium suitable for storing electronic instructions. In addition, each of them may be coupled to a computer system bus. Moreover, the computer mentioned in the specification may include a single processor or may be an architecture using a plurality of processors for increased computing capabilities.

In addition, the language used in the specification is already mainly selected for readability and instructional purposes and may not be selected to depict or limit the disclosed topics. Therefore, embodiments of this application are intended to describe but not to limit the scope of the concepts discussed in the specification.

## Claims

1. An interaction method, applied to an electronic device, wherein the method comprises:
displaying a first interface, wherein the first interface comprises a first window and a first display area, and the first display area comprises a first identification image of the first window;
detecting a first drag operation performed by a user on the first identification image; and
moving the first window in response to the first drag operation.

2. The method according to claim 1, wherein the electronic device comprises a foldable device, wherein the foldable device comprises a first screen part and a second screen part located on two sides of a folding shaft.

3. The method according to claim 2, wherein the first screen part is located in a first direction of the second screen part, the second screen part is located in a second direction of the first screen part, and the first direction is opposite to the second direction.

4. The method according to claim 3, wherein the first display area is located in the first screen part.

5. The method according to claim 4, wherein detecting the first drag operation performed by the user on the first identification image comprises:
detecting an operation of dragging, by the user, the first identification image to move towards the second direction.

6. The method according to claim 4, wherein the second screen part comprises a displayed second interface, the second interface comprises a second window, and the first display area comprises a second identification image corresponding to the second window.

7. The method according to claim 6, wherein the method comprises:
detecting a second drag operation of dragging, by the user, the second identification image to move towards the first direction; and
moving, in response to the second drag operation, the second window to the first interface displayed on the first screen part.

8. The method according to claim 7, wherein detecting the first drag operation performed by the user on the first identification image comprises:
detecting that a first distance by which the user drags the first identification image to move towards the second direction meets a first threshold condition; and/or
detecting the second drag operation of dragging, by the user, the second identification image to move towards the first direction comprises:
detecting that a second distance by which the user drags the second identification image to move towards the first direction meets the first threshold condition.

9. The method according to claim 4, wherein detecting the first drag operation performed by the user on the first identification image comprises:
detecting a first combination operation performed by the user on the first identification image, wherein the first combination operation comprises a first operation of dragging the first identification image to move towards the second direction and hovering; and
detecting an operation of selecting, by the user, a first area in a second display area displayed by triggering the first operation, wherein
the second display area comprises at least one display area recommended for the first window, the at least one display area comprises the first area, and the at least one display area is located in a display area of the second screen part.

10. The method according to claim 9, wherein moving the first window in response to the first drag operation comprises:
displaying, in response to the first combination operation, the first window in a corresponding area of the first area in the second screen part.

11. The method according to claim 6, wherein the method comprises:
detecting a second combination operation performed by the user on the second identification image, wherein the second combination operation comprises a second operation of dragging the second identification image to move towards the first direction and hovering;
detecting an operation of selecting, by the user, a second area in a third display area displayed by triggering the second operation, wherein the third display area comprises at least one display area recommended for the second window, the at least one display area comprises the second area, and the at least one display area is located in a display area of the first screen part; and
displaying, in response to the second combination operation, the second window in a corresponding area of the second area in the first screen part.

12. The method according to claim 11, wherein a third distance by which the first
identification image is dragged to move towards the second direction meets a second threshold condition; and/or
a fourth distance by which the second identification image is dragged to move towards the first direction meets the second threshold condition.

13. The method according to any one of claims 9 to 12, wherein duration corresponding to the hovering operation meets a third threshold condition.

14. The method according to claim 4, wherein detecting the first drag operation performed by the user on the first identification image comprises:
detecting a third combination operation performed by the user, by using a mouse, on the first identification image, wherein the third combination operation comprises a third operation of placing the mouse on the first identification image and hovering; and
detecting an operation of clicking, by the user by using the mouse, a first control in a plurality of controls displayed by triggering the third operation, wherein the first control indicates a screen part in which the first window is displayed.

15. The method according to claim 14, wherein the screen part indicated by the first control for display is the second screen part.

16. The method according to claim 15, wherein moving the first window in response to the first drag operation comprises:
displaying, in response to the third combination operation, the first window in the second screen part indicated by the first control.

17. The method according to claim 16, wherein an icon indicating the second direction is displayed on the first control.

18. The method according to any one of claims 14 to 17, wherein duration corresponding to the hovering operation meets a fourth threshold condition.

19. The method according to claim 3, wherein the first display area is located in the second screen part.

20. The method according to claim 19, wherein detecting the first drag operation performed by the user on the first identification image comprises:
detecting an operation of dragging, by the user, the first identification image to move towards the first direction.

21. The method according to claim 19, wherein detecting the first drag operation performed by the user on the first identification image comprises:
detecting a fourth combination operation performed by the user on the first identification image, wherein the fourth combination operation comprises a fourth operation of dragging the first identification image to move towards the first direction and hovering; and
detecting an operation of selecting, by the user, a third area in a fourth display area displayed by triggering the fourth operation, wherein
the fourth display area comprises at least one display area recommended for the first window, the at least one display area comprises the third area, and the at least one display area is located in a display area of the first screen part.

22. The method according to claim 19, wherein detecting the first drag operation performed by the user on the first identification image comprises:
detecting a fifth combination operation performed by the user, by using a mouse, on the first identification image, wherein the fifth combination operation comprises a fifth operation of placing the mouse on the first identification image and hovering; and
detecting an operation of clicking, by the user by using the mouse, a second control in a plurality of controls displayed by triggering the fifth operation, wherein the second control indicates a screen part in which the first window is displayed, and the screen part comprises the first screen part or the second screen part.

23. The method according to any one of claims 1 to 19, wherein the first identification image comprises:
a thumbnail window corresponding to the first window; or
an application icon corresponding to an application interface displayed in the first window.

24. An electronic device, comprising one or more processors and one or more memories, wherein the one or more memories store one or more programs, and when the one or more programs are executed by the one or more processors, the electronic device is enabled to perform the interaction method according to any one of claims 1 to 23.

25. A computer-readable medium, wherein the readable medium stores instructions, and when the instructions are executed on a computer, the computer is enabled to perform the interaction method according to any one of claims 1 to 23.

26. A computer program product, comprising a computer program/instructions, wherein when the computer program/instructions is/are executed by a processor, the interaction method according to any one of claims 1 to 23 is implemented.
